# EUROPEAN PATENT APPLICATION

(11) **EP 2 747 008 A1**
(43) Date of publication of application: **25.06.2014**
(21) Application number: 13005170.9
(22) Date of filing: 31.10.2013
(51) Int. Cl.: G06Q 10/10

(54) **Identifying candidate referrers**

(30) Priority: 21.12.2012 US 201213723835
(71) Applicant: SAP AG, 69190 Walldorf (DE)
(72) Inventor: Baeck, Tanja, 69190 Walldorf (DE); Hoque, S M Fazlul, 69190 Walldorf (DE); Paul, Elmar, 69190 Walldorf (DE); Storch, Silke, 69190 Walldorf (DE); Wiest, Bertram, 69190 Walldorf (DE)
(74) Representative: Müller-Boré & Partner Patentanwälte PartG mbB

(57) **Abstract**

Computer-implemented methods, computer-readable media, and computer systems for acquiring talent for organizations. Multiple job criteria that collectively represent requirements of a job are received. Multiple referrers is identified. Each referrer is associated with multiple referrer attributes that collectively represent social associations of each referrer. Based on social associations of the multiple referrers and the requirements of the job, a subset of the multiple referrers is determined. Each referrer in the subset is associated with one or more referrer attributes that match one or more job criteria of the multiple job criteria. The subset of the multiple referrers is provided as candidate referrers from whom referrals for candidates for the job can be sought.

## Description

### TECHNICAL FIELD

The present disclosure relates to software, computer systems, and computer-implemented methods for obtaining and evaluating talent that can provide services to organizations.

### BACKGROUND

An organization (such as a business that offers products or services or both) seeks talent, such as people, that have the skills to assist the organization in providing its products or services. The organization can include a Human Resources (HR) department dedicated to searching for, evaluating, and acquiring such talent. Alternatively, or even more and more in addition, individuals or other departments in the organization can search for, evaluate, and acquire talent as the need arises for those individuals or departments, respectively. To acquire talent for a job in the organization, a job profile, which specifies criteria associated with the job, can be used as the basis. The job profile can be circulated and responses from persons interested in the job can be solicited. Responses, including resumes, from one or more persons can be received and evaluated to identify candidates for the job. The candidates can be interviewed, and one or more of the interviewed candidates can be hired.

In one example of talent acquisition, the job profile can be published, for example, on a website such as www.monster.com (provided by Monster Worldwide, Inc., of NY). For example, a representative of the organization's HR department can create the job profile and post the job profile on the website. In the job profile, the HR representative can list multiple criteria associated with the job, for example, education, experience, skills, and the like. When a person seeking a job that includes one or more of the multiple criteria searches the website, the job profile can be provided as a search result. The person may then contact the organization, which may interview and hire the person. Alternatively or in addition, the HR representative can search the skills of candidates published on the website (for example, by the candidates themselves) for one or more candidates whose skills match the criteria associated with the job. In another example of talent acquisition, the HR representative can circulate the job profile to multiple recruiters who can attempt to identify candidates that satisfy the criteria specified in the profile. Moreover, the organization can directly contact persons having skills which the organization knows as satisfying the criteria specified in the profile, and inquire of their interest in accepting the job with the organization.

### SUMMARY

The present disclosure involves systems, software, and computer-implemented methods for acquiring talent for organizations.

In general, one innovative aspect of the subject matter described here can be implemented as a method performed by data processing apparatus to identify candidate referrers. Multiple job criteria that collectively represent requirements of a job are received. Multiple referrers are identified. Each referrer is associated with multiple referrer attributes that collectively represents social associations of each referrer. Based on social associations of the multiple referrers and the requirements of the job, a subset of the multiple referrers is determined. Each referrer in the subset is associated with one or more referrer attributes that match one or more job criteria of the multiple job criteria. The subset of the multiple referrers is provided as candidate referrers from whom referrals for candidates for the job can be sought.

This, and other aspects, can include one or more of the following features. Providing the subset of the multiple referrers as candidate referrers can include displaying the subset of the multiple referrers in a user interface. The job can be a job in an organization. Whether a candidate referrer is internal or external to the organization can be displayed in the user interface. A referrer attribute associated with a referrer can include an industry with which the referrer is or was associated. A job criterion can include an industry. It can be determined that the industry with which the referrer is or was associated matches the industry in the job criterion. A capability of each candidate referrer to provide referrals for candidates for the job sought can be determined. The candidate referrers can be ranked based on the capability of each candidate referrer. Determining the capability of each candidate referrer to provide referrals can include determining referral metrics associated with each candidate referrer. The referral metrics can be provided with the subset of the multiple referrers. The referral metrics can include at least one of a number of referrals previously received from each candidate referrer or a number of previous hires based on the referrals previously received from each candidate referrer. Input can be received to select one or more candidate referrers of the subset. The multiple job criteria that collectively represent the requirements of the job can be provided to the selected one or more candidate referrers. Determining the subset of the multiple referrers can include comparing multiple referrer attributes associated with each referrer to the multiple job criteria, and identifying one or more referrers associated with at least one referrer attribute that matches at least one job criterion. The social associations of the multiple referrers can include professional associations. The social associations can be digitally stored in a computer-readable storage medium. Identifying the multiple referrers can include accessing the social associations stored in the computer-readable storage medium. Receiving the multiple job criteria can include providing a user interface that includes multiple controls, each of which is configured to receive a job criterion, and receiving the multiple job criteria through the multiple controls in the user interface.

Another innovative aspect of the subject matter described here can be implemented as a non-transitory computer-readable medium storing instructions executable by data processing apparatus to perform operations described here. A further innovative aspect of the subject matter described here can be implemented as a system that includes data processing apparatus and a computer-readable medium storing instructions executable by the data processing apparatus to perform the operations described here.

While generally described as computer-implemented software embodied on tangible media that processes and transforms the respective data, some or all of the aspects may be computer-implemented methods or further included in respective systems or other devices for performing this described functionality. The details of these and other aspects and implementations of the present disclosure are set forth in the accompanying drawings and the description below. Other features and advantages of the disclosure will be apparent from the description and drawings, and from the claims.

### BRIEF DESCRIPTION OF THE DRAWINGS

FIG. 1 illustrates an example of a system for talent acquisition.

FIG. 2 illustrates an example of the system for identifying referrers from whom referrals for talent can be sought.

FIGS. 3A and 3B illustrate example user interfaces for displaying data describing referrers from whom referrals for talent can be sought.

FIG. 4 is a flowchart of an example process for identifying referrers from whom referrals for talent can be sought.

FIG. 5 illustrates an example of the system for searching for candidates for a job.

FIGS. 6A and 6B illustrate example user interfaces for receiving and displaying a job profile.

FIG. 7 is a flowchart of an example process for searching for candidates for a job.

FIG. 8 illustrates an example of the system for presenting candidates for a job.

FIG. 9 illustrates an example user interface for displaying candidates for a job.

FIG. 10 is a flowchart of an example process for presenting candidates for a job.

FIG. 11 illustrates an example of the system to identify an endorser of a candidate for the job.

FIGS. 12A and 12B illustrate example user interfaces for displaying data describing a candidate and an endorser of the candidate.

FIG. 13 is a flowchart of an example process for identifying an endorser of a candidate for the job.

FIG. 14 illustrates an example of the system for presenting referrers according to respective degrees of association.

FIGS. 15A and 15B illustrate example user interfaces for displaying referrers according to respective degrees of association.

FIG. 16 is a flowchart of an example process for presenting referrers according to respective degrees of association.

FIG. 17 illustrates an example of the system for determining metrics for referrers.

FIG. 18 illustrates an example of a user interface for displaying metrics for referrers.

FIG. 19 is a flowchart of an example process for determining metrics for referrers.

FIG. 20 is a flowchart of another example process for determining metrics for referrers.

Like reference numbers and designations in the various drawings indicate like elements.

### DETAILED DESCRIPTION

### I. Overview

Computer-implemented methods, computer-readable storage media, and computer systems for acquiring talent for organizations are described in this disclosure. The success of an organization depends, in large part, on finding and retaining the services of top quality talent. Talent can include people whom the organization wants to employ, other organizations (for example, vendors) from whom the organization wants to procure products or services (or both) or combinations of people and other organizations. Because such talent may not actively seek employment, qualified top quality candidates can be difficult to find for jobs in the organization. This disclosure describes techniques that the organization can implement to proactively seek out and identify top quality talent, thereby improving the organization's chances of retaining such talent. The organization can implement the techniques described here to target top quality talent, hire and retain such talent, and evaluate its hiring processes based on the performances of the hired talent.

As described below, in some implementations, the organization can acquire talent based on social associations of entities, which can include social associations of the talent and social associations of the organization itself. For example, social associations of a talent (for example, a person or an organization) can associate the talent with several entities (for example, other persons, organizations, groups, and the like). In some situations, an entity can create an electronic digital profile on a social network. Examples of social networks include Facebook™ (provided by Facebook, Inc. of CA), LinkedIn™ (provided by LinkedIn, Inc. of CA), Xing™ (provided by Xing AG of Germany), to name a few. In the profile, the entity can include information describing the entity (for example, personal information, professional information, interests, affiliations, and others). The entity can create social associations, i.e., electronic connections, between the entity's profile and profiles of other entities (for example, other people, organizations, groups, and others). Exemplary social associations can be formed when the entity adds another entity as a contact, becomes friends with another entity, follows another entity, joins the same group as another entity, follows the same entity as the other entity, or likes or favorites another entity, among others. The formation of each social association can be a respective computer-implemented operation; each social association can be stored on a computer-readable storage medium. Computer server systems that host the social network websites can store the social associations of each entity on computer-readable storage media. An entity can include a talent, for example, a person seeking a job or the organization offering the job or combinations of them or any other entity. All such entities can create respective profiles, which the computer server systems can store on the computer-readable storage media.

Through respective social associations created on respective profiles, the talent and the organization can form a network of relationships with each other either directly or indirectly. For example, the talent can directly form a social association with the organization by "following" the organization on the social media network. The talent can indirectly form a social association with the organization by forming a social association (either directly or indirectly) with another entity which has formed a social association (direct or indirect) with the organization. The resulting social associations can provide a network of existing relationships between several entities that include the organization and the talent. By implementing the techniques described below, the organization can leverage and extend the relationships formed by the social associations to get the top quality talent. The organization can evaluate and improve not only the quality of the hired talent but also the quality of the sources that identify potential top quality talent. The following sections describe implementations of the techniques described here by organizations to evaluate and improve the quality of people hired to fill jobs in the organization. Similar techniques can be implemented by the organizations to evaluate and hire other associates who provide services or products to the organization. For example, by implementing techniques substantially similar to those described with reference to hiring people for jobs, organizations can hire top quality associates (such as vendors, partners, and the like) to provide products or services (or both) to the organization The organizations can additionally evaluate the quality of sources that identify such associates to the organizations.

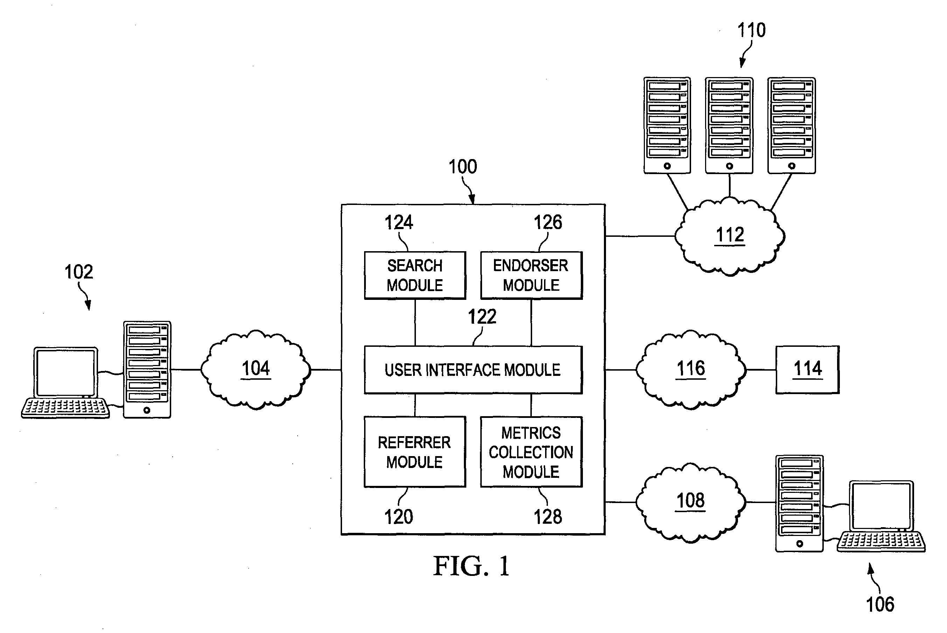

FIG. 1 illustrates an example of a system 100 for talent acquisition. The system 100 can be implemented as a computer server system hosted by an organization to execute computer instructions to perform talent acquisition operations. In some implementations, the system 100 can be implemented as a cloud computing system hosted by the organization or by a third party that is external to the organization. The system 100 can be connected to one or more computer systems (for example, an input computer system 102, an output computer system 106), over one or more networks (such as, networks 104, networks 108, respectively) for example, the Internet. Such a computer system can be a client device (for example, a desktop computer, a laptop computer, a personal digital assistant (PDA), a tablet computer, a smartphone, and the like) using which a user can interact with the system 100 to search for, identify, and evaluate talent.

The system 100 can additionally be connected to multiple external computer server systems 110 over one or more networks 112, for example, the Internet. The computer server systems 110 can be external to the organization and can include computer-readable storage media that can store information about talent that is external to the organization. Similar information about talent that is internal to the organization can be stored in an internal computer server system 114 connected to the system 100 over one or more networks 116 (for example, a Local Area Network, a Wide Area Network, and the like). By implementing the techniques described here, a user of the input computer system 102 can interact with the system 100 to search the multiple external computer server systems 110 or the internal computer server system 114 (or both) to acquire talent for the organization.

The system 100 for talent acquisition can be implemented to include multiple modules, each of which either alone or in combination with other modules, can perform operations related to talent acquisition. As described in detail below, each module can be implemented as computer-readable instructions stored on computer-readable media and executable by data processing apparatus included in the system 100. In general, the organization can implement the modules in system 100 to acquire talent, for example, one or more persons for one or more jobs in the organization. The system 100 can implement a referrer module 120 that can identify multiple candidate referrers from each of whom referrals for persons suitable for the job in the organization can be sought. The system 100 can implement a search module 124 that can identify candidates for the job by searching the persons identified by the candidate referrers and also by searching profiles of persons stored on the external computer server systems 110 and the internal computer server system 114.

The system 100 can implement an endorsers module 126 that can identify one or more endorsers who can endorse a candidate identified by the system 100 as being suitable for the job. The system 100 can additionally implement the endorsers module 126 to enable a user of the system 100 to contact an endorser of a candidate for information (for example, a referral) about the candidate. The system 100 can implement a metrics collection module 128 that can track the evaluation of a particular candidate through the hiring process, and determine metrics that represent a quality of a referrer who recommended the particular candidate to the organization. Using such metrics collected for multiple referrers, the organization can rank the referrers to make future decisions about seeking referrals from the referrers.

The system 100 can additionally rank each candidate according to a suitability for the job. The system 100 can implement a user interface module 122 that can display, in one or more user interfaces, the candidate referrers identified by implementing the referrer module 120, data describing the endorsers determined by implementing the endorsers module 126, the candidates for the job identified by implementing the search module 124, and the metrics determined by implementing the metrics collection module 128. The system 100 can present the one or more user interfaces to users of client devices such as the input computer system 102 or the output computer system 106 (or both).

Various operations that the system 100 can perform are described in detail with reference to the following figures in the following sections.

Section II describes the operations that the system 100 can perform to identify candidate referrers from whom referrals for candidates for a job in an organization can be sought.

Section III describes the operations that the system 100 can perform to search multiple computer server systems that store social associations of persons to identify candidates for the job. As described below, the system 100 can search computer server systems that are external to the organization and computer server systems that are internal to the organization for the candidates.

Section IV describes the operations that the system 100 can perform to present candidates that are external to the organization and candidates that are internal to the organization as unified search results.

Section V describes the operations that the system 100 can perform to identify an endorser who can endorse a candidate for the job based on the social associations of the candidate and those of the endorser. The system 100 can additionally perform operations to enable a user (for example, the HR representative) to contact the endorser to obtain an endorsement (or other feedback) about the candidate.

Section VI describes the operations that the system 100 can perform to display the referrers from whom referrals for candidates were sought and from whom such referrals were received in a user interface that allows a user (for example, the HR representative) to visualize a degree of association between the organization and the referrer.

Section VII describes the operations that the system 100 can perform to track an evaluation of each candidate for the job and to determine metrics that describe a quality of a referrer who referred each candidate based on the evaluation of each candidate. In addition, the system 100 can provide the metrics determined for a candidate referrer in response to a subsequent request for candidate referrers from whom referrals for another job can be sought.

The system 100 can perform the operations described in each of the following sections alone or in combination with operations described in other sections. For example, the system 100 can perform all or portions of the operations described in any of the sections together with (for example, in serial or in parallel with) all or portions of the operations described in any other section. By implementing the various operations described below, the system 100 can provide an integrated and complete talent acquisition system that can help the organization not only find and hire top quality talent but also can help the organization evaluate and refine its hiring processes.

### II. Identifying Candidate Referrers

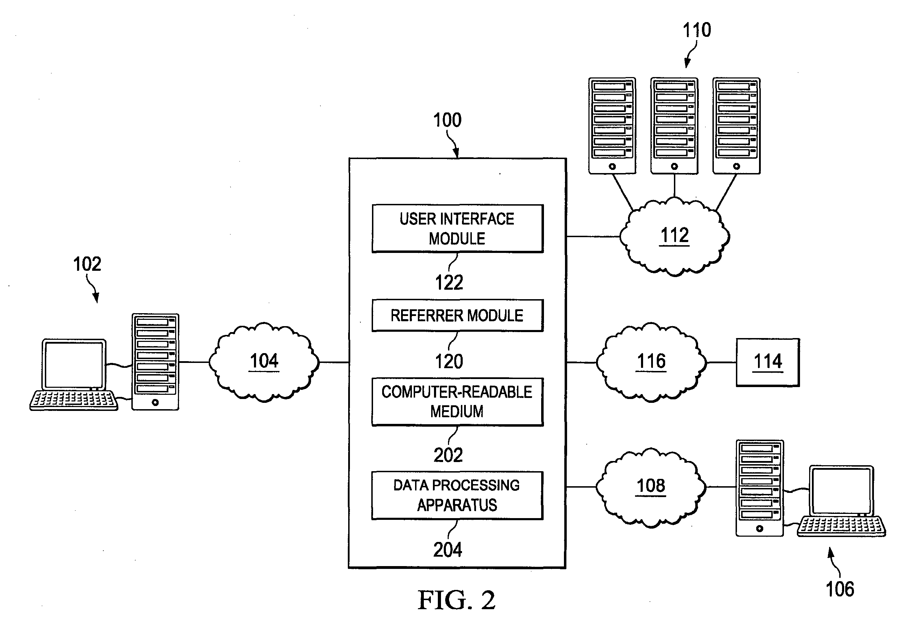

FIG. 2 illustrates an example of the system 100 for identifying referrers from whom referrals for talent can be sought based on comparisons of social associations of referrers and job criteria that represent requirements of a job. As described below, the social associations of the referrers can include professional associations that are digitally stored on computer-readable storage media. The system 100 can include a computer-readable medium 202 that can store computer instructions executable by data processing apparatus 204 to identify candidate referrers by performing operations including accessing the social associations stored in the computer-readable storage media.

In some implementations, the system 100 can receive multiple job criteria that collectively represent requirements of a job. For example, using a computer system, such as the input computer system 102, a user (for example, an HR representative), can provide instructions to the system 100 to execute a computer software application using which the user can create a job profile. The system 100 can receive the input, for example, over the networks 104. In response to receiving the input to create the job profile, the system 100 can execute a computer software application to present one or more user interfaces into which the user can provide the multiple job criteria, which can include, for example, a preferred education, a preferred experience, a preferred skill set, a preferred expertise, a preferred industry, and the like.

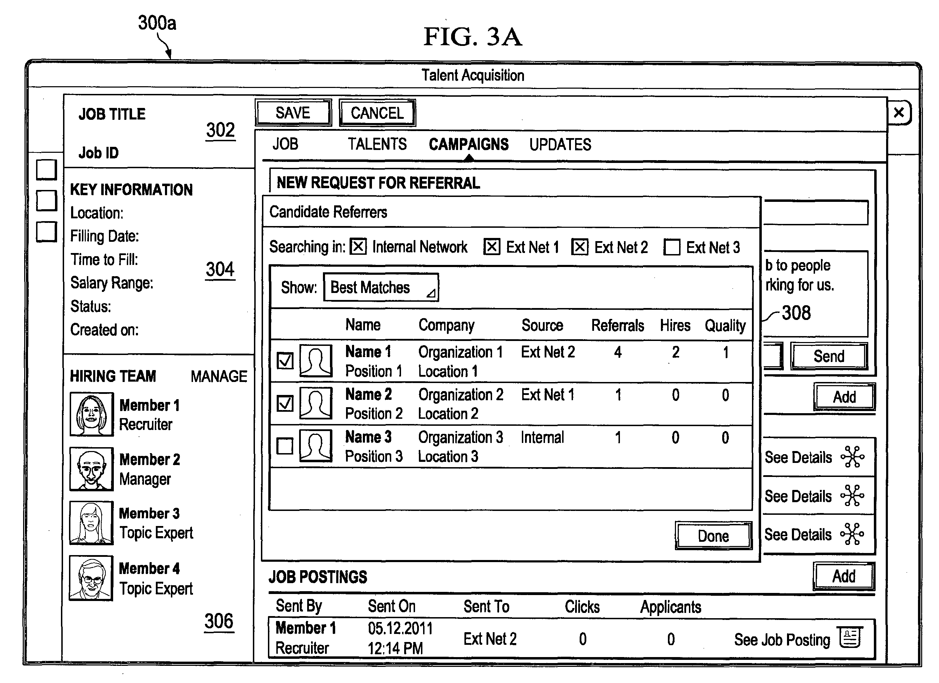

In some implementations, the system 100 can execute the user interface module 122 to display the user interface 300a (FIG. 3A), for example, on a display device of the input computer system 102 or the output computer system 106 (or both). The user interface module 122 can configure the user interface 300a to receive the multiple job criteria and other information from the user. For example, the user interface module 122 can display the user interface to include multiple controls, each configured to receive a job criterion. The user interface 300a can receive the multiple job criteria through the multiple controls.

In the user interface 300a, the user interface module 122 can display job description portions (a first portion 302, a second portion 304, a third portion 306) that includes the multiple criteria that collectively represent the requirements of the job (for example, a job title, a job identifier, key information about the job). In addition to the criteria described above, the multiple criteria can include, for example, a job location, a filling (or start) date, a time to fill the job, salary range, status of the hiring process, a date on which the job profile was created, and the like. The job description portions can additionally include information describing the user (or users) who are associated with filling the job, for example, members of the organization's hiring team. The job description portions can be populated with the criterion received through the user interface as described above.

Having created the job profile, the user can subsequently provide input to identify referrers from whom referrals for candidates for the job can be sought. A referrer can include a recruiter (or a recruiting company) that professionally identifies candidates for jobs offered by various organizations. A referrer can also include current or former employees of the organization who know (or may know) candidates who may qualify for the job described in the job profile. A referrer can further include an entity (a person or another organization) which is unknown to the organization.

The system 100 can implement the referrer module 120 to identify multiple referrers, each of whom can be associated with multiple referrer attributes that collectively represents social associations of each referrer. For example, each referrer can have a profile on one or more social network websites, for example, www.facebook.com, www.linkedin.com, www.xing.com, and the like. As described above, each profile can describe the social associations about each referrer and can be hosted by the external computer server systems 110. Each external computer server system 110 can be connected to a respective computer-readable storage medium that can store the social associations of each referrer. Current employees of the organization may, alternatively or in addition, have an internal profile on an internal network platform (for example, an internal social network) hosted by the organization. Such profiles can also include social associations and can be hosted by the internal computer server system 114. The social associations included in the internal profile can also be stored in computer-readable storage media connected to the internal computer server system 114.

The system 100 can search the external computer server systems 110 and the internal computer server systems 114 to identify multiple referrers. In response to the search, the system 100 can identify, for example, profiles of recruiters (or recruiting companies), profiles of current or former employees, and also profiles of entities which are unknown to the organization. To identify recruiters, for example, the system 100 can search for entities that have identified themselves as recruiters in their respective social associations. To identify current and former employees, for example, the system 100 can search for social associations that list the organization's name under current or former employment. The user (for example, the HR representative) can provide a set of keywords to identify entities from which referrals for candidates can be sought. The keywords can include, for example, keywords that identify the organization and, more particularly, the department associated with the job. The keywords can also include one or more of the multiple job criteria. The system 100 can additionally search social associations of some or all profiles hosted by the external computer server systems 110 based on the set of keywords to identify such entities. In this manner, the system 100 can identify multiple referrers.

However, only a subset of all the referrers identified by the search may be candidate referrers from whom the organization would want to seek referrals for the particular job that the organization wants to fill. The system 100 can implement the referrer module 120 to identify the subset of the multiple referrers based on social associations of the multiple referrers and the requirements of the job. For example, from among the multiple referrers identified as described above, the system 100 can determine one or more referrers, each of which is associated with one or more referrer attributes that match one or more job criteria of the multiple job criteria. If an identified referrer is a recruiter, for example, then the social associations (i.e., referrer attributes) of the recruiter (included, for example, from the recruiter's profile on the social network) can include associations to one or more particular industries with which the recruiter is or was associated. If the job criteria include an industry that matches the one or more particular industries with which the referrer is associated, then the recruiter can be a candidate referrer from whom referrals for candidates for the job can be sought.

If the referrer is a current employee, for example, then the social associations of the current employee (included, for example, in the current employee's profile hosted by either the external computer server systems 110 or the internal computer server systems 114) can include associations to one or more social groups that are in the same field as the job. For example, if the job criteria indicate that the job is for a mechanical engineer, and the current employee's profile shows that the current employee follows the National Society of Mechanical Engineers, then the current employee may be a candidate referrer from whom referrals for candidates for the job can be sought. If the referrer is a former employee, for example, then the social associations of the former employee can include associations to one or more other persons whose qualification matches the qualification included in the job criteria. Such a former employee may also be a candidate referrer from whom referrals for candidates for the job can be sought.

The afore-described techniques are only some examples of identifying candidate referrers from whom referrals for candidates for the job can be sought. In general, the system 100 can compare the multiple criteria that collectively represent the requirements for the job with referrer attributes of the identified multiple referrers. Based on the comparing, the system 100 can identify one or more of the identified referrers with respective referrer attribute (or attributes) that match a job criterion (or job criteria). A probability that a referrer will be included in the subset can be high if several of the social associations of the referrer match several of the job criteria. The system 100 can identify such referrers as candidate referrers from whom referrals can be sought for candidates for the particular job that the organization wants to fill.

The system 100 can provide the subset of the multiple referrers as candidate referrers from whom referrals for candidate for the job can be sought. For example, the system 100 can implement the user interface module 122 to display, in user interface 300a, a control button, the selection of which represents an input to provide the candidate referrers. In response to receiving the input, the user interface module 122 can display the subset of the multiple referrers, i.e., the candidate referrers, in a portion 308 in the user interface 300a. For each candidate referrer, the user interface module 122 can display identifying information (for example, a name), affiliation (for example, a present or past employment or both), and referral metrics.

A referral metric can include at least one of a number of referrals previously received from each candidate referrer or a number of previous hires based on the referrals previously received from each candidate referrer (or both). As described below in Section VII, the system 100 can implement the metrics collection module 128 to determine the referral metrics. In some implementations, the system 100 can rank the candidate referrers based on a capability of each candidate referrer to provide referrals for candidates for the job sought. The system 100 can rank the candidate referrers based, at least in part, on referral metrics that the system 100 determines for each candidate referrer. In some implementations, the candidate referrers that the user interface module 122 displays in the portion 308 can be a few top-ranked candidate referrers. For example, the user interface module 122 can first display a candidate referrer who has previously provided four referrals of whom two were hired of whom one was a top quality talent. One referral can have previously been received from each of the second and third candidate referrers that the user interface module 122 can display after the first candidate referrer in the first portion 308.

In addition to displaying the data describing the candidate referrers, the user interface module 122 can additionally display, in the user interface 300a, an identifier identifying each computer server system that was searched to identify the candidate referrers. In some implementations, the user interface module 122 can display a selectable control (for example, a check-box) adjacent to the identifier identifying each computer server system that was searched. If the user selects a particular identifier, then the system 100 can display only the candidate referrers identified by searching a particular computer server system that the particular identifier identifies. In this manner, the system 100 can filter the candidate referrers presented to a user based on the computer server systems that were searched. In some implementations, the user interface module 122 can display an identifier indicating whether a candidate referrer is internal or external to the organization.

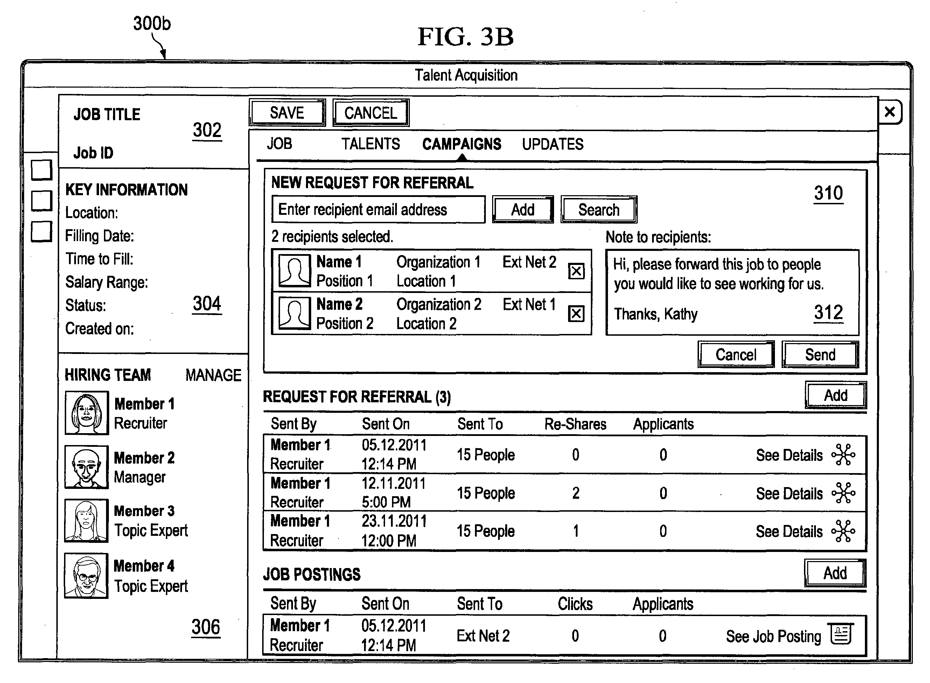

In some implementations, the user interface module 122 can display a selectable control (for example, a check-box) adjacent to each candidate referrer in the first portion 308. A selection of the control adjacent to a candidate referrer represents an input to send a request for referrals for the job to the candidate referrer. The user can select one or more selectable controls, in response to which the user interface module 122 can display indicators (for example, check marks) to indicate the selection. The user interface module 122 can subsequently display another user interface 300b (FIG. 3B) that displays the selected candidate referrers in a first portion 310 and displays a control 312 (for example, a text box) into which the user can enter a message to be sent to each candidate referrer displayed in the portion 310. In this manner, the user can send a request for referrals for the job to one or more or all of the candidate referrers that the system 100 identifies by implementing the techniques described here. The request for referrals can include the multiple job criteria.

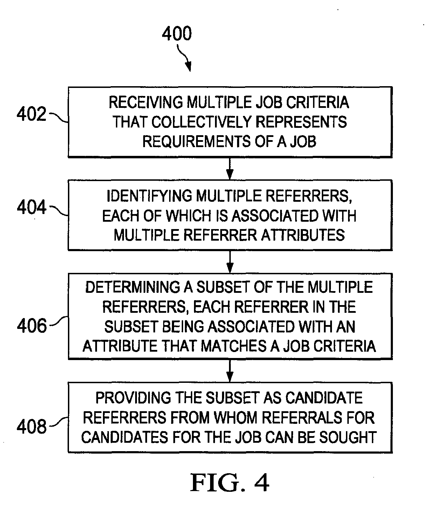

FIG. 4 is a flowchart of a process 400 for identifying referrers from whom referrals for talent can be sought. The process 400 can be implemented as computer instructions stored on computer-readable media (for example, the computer-readable medium 202) and executable by data processing apparatus (for example, data processing apparatus 204). For example, the process 400 can be implemented by system 100 to identify candidate referrers. At 402, multiple job criteria that collectively represent requirements of the job are received. As described above, those criteria may be received by the system 100 through a user interface that includes multiple controls, each of which is configured to receive a job criterion. At 404, multiple referrers can be identified; each referrer can be associated with multiple referrer attributes that collectively represent social associations of each referrer.

At 406, a subset of the multiple referrers can be determined based on social associations of the multiple referrers and the requirements of the job. Each referrer in the subset can be associated with one or more referrer attributes that match one or more job criteria of the multiple job criteria. For example, if a job criteria includes an industry and a referrer attribute associated with a referrer includes the industry, then the referrer can be included in the subset. At 408, the subset of the multiple referrers can be provided as candidate referrers from whom referrals for candidates for the job can be sought. For example, the candidate referrers can be displayed in a user interface along with referral metrics associated with each candidate referrer. Requesting referrals for candidates for the job is one of several techniques that the system 100 can implement to search for candidates for the job. Additional techniques to search for candidates are described in the following section.

### III. Searching for Candidates for a Job

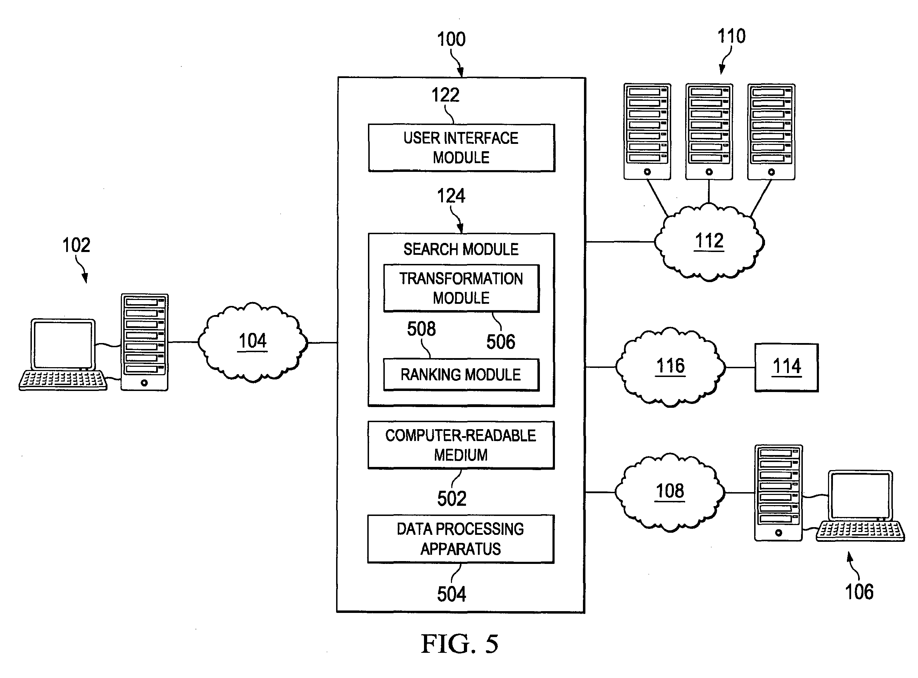

FIG. 5 illustrates an example of the system 100 for searching for candidates for a job. The system 100 can include a computer-readable medium 502 that can store computer instructions executable by data processing apparatus 504 to search for candidates for the job based on comparisons of job criteria that collectively represent requirements of the job and social associations of persons, for example, social associations in profiles hosted by computer server systems.

In some implementations, the system 100 receives multiple job criteria that collectively represent requirements for the job. As described above, a user (for example, an HR representative) can use a computer system, such as the input computer system 102, to provide instructions to the system 100 to execute a computer software application using which the user can create a job profile. The system 100 can implement the user interface module 122 to provide one or more user interfaces that include multiple controls, each of which is configured to receive a job criterion. The system 100 can receive the multiple job criteria through the multiple controls in the user interface.

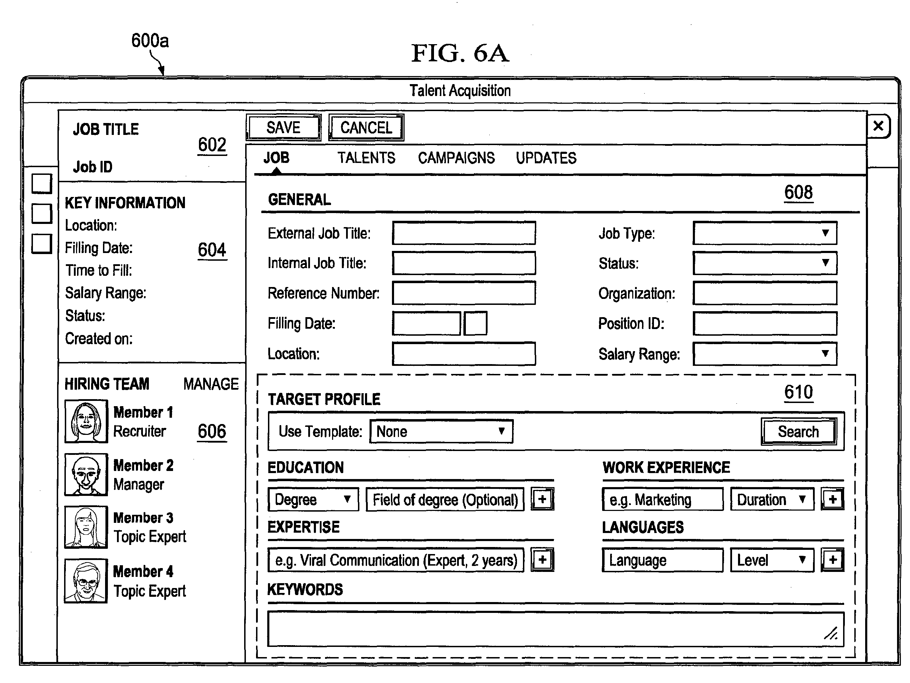

For example, in response to receiving input from the user to create a job profile, the user interface module 122 can display a user interface 600a (FIG. 6A) in a display device of the computer system using which the user provided the input. In the user interface 600a, the user interface module 122 can display multiple portions (a first portion 602, a second portion 604, a third portion 606) in which the user interface module 122 can display information associated with the job. In the first portion 602, the second portion 604, and the third portion 606, the user interface module 122 can display an identifier identifying the job (such as a job title, a job ID), key information associated with the job (such as a job location, a filling date, a time to fill the job, salary range, status of the hiring process, a date on which the job profile was created), and information describing the user (or users) who are associated with filling the job (such as members of the organization's hiring team), respectively.

The user interface module 122 can display a fourth portion 608 that includes multiple controls, for example, at least one or more of textboxes, drop-down menus, calendars, or the like, into which the user can provide job criteria. The criteria can include a job title (received through an "External Job Title" control or "Internal Job Title" control, or both), an identifier (received through a "Reference Number" control), a start date (received through a "Filling Date" control), and a location (received through a "Location" control). Additional criteria can include a job type (received through a "Job Type" control), a job status (received through a "Status" control), a name of the organization (received through an "Organization" control), an identifier for the job (received through a "Position ID" control), and a salary range (received through a "Salary Range" control).

The user interface module 122 can display a fifth portion 610 that includes multiple controls using which the user can define a target profile of the job. For example, the fifth portion 610 can include an "Education" control, an "Expertise" control, and a "Work Experience" control that can respectively receive the education, expertise, and work experience that a candidate for the job preferably has. In addition, the fifth portion 610 can include a "Languages" control into which the user can provide one or more languages in which the candidate for the job is preferably fluent. The fifth portion 610 can additionally include a "Keyword" control into which the user can provide one or more keywords, each of which is also a job criterion. The HR representative can select the keywords to be specific and relevant to find a candidate for the job. As described below, the system 100 can execute the search module 124 to search for candidates who at least partially satisfy the multiple job criteria received through portions of the user interface 600a, and can additionally rank the candidates according to each candidate's match for the job.

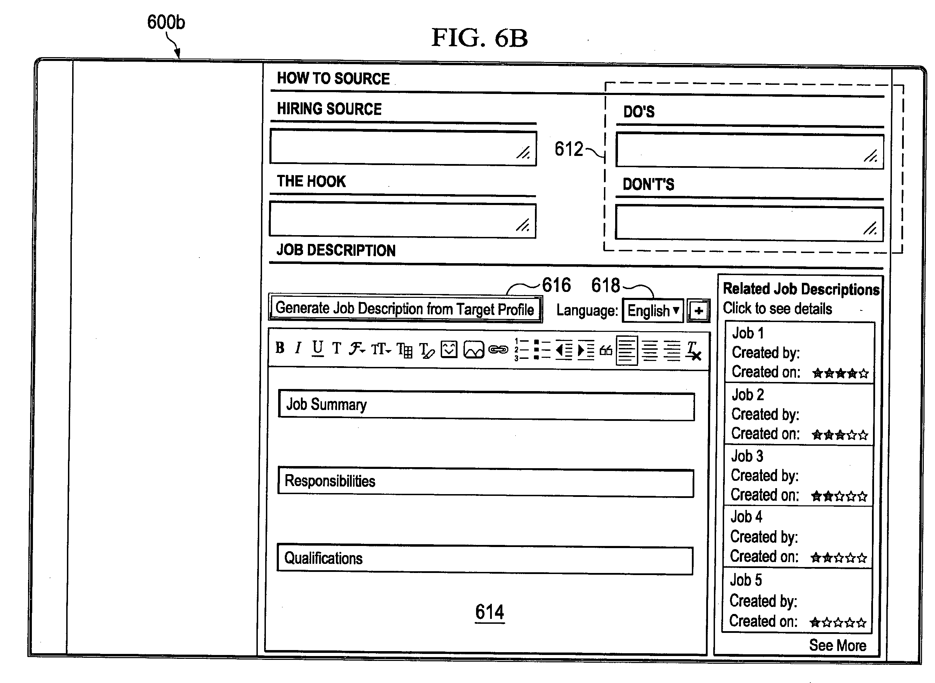

In some implementations, the search module 124 can additionally associate a weight with each person identified as a candidate for the job based on one or more preferred criteria received through a user interface, as described below, and adjust the rank of each candidate based on the associated weight (or weights). A preferred criterion can include a feature that a job candidate should have (for example, "DO's") or a feature that a job candidate should not have (for example, "DON'T's"), or both. For example, the job criteria for a particular job can include a range of education (such as a Bachelors, Masters, or Doctoral degree) and a range of years of experience in an industry. Preferred criteria, in this example, can specify combinations of criteria that a person can have to be a candidate for the job. For example, a preferred criterion can be that the person have at least a Masters degree or better (i.e., a Bachelors degree can be a "DON'T" criterion). A preferred criterion can be that the person has two years of experience in the industry (i.e., two years or more can be a "DO" criterion). To receive the preferred criteria, the user interface module 122 can display a sixth portion 612 (FIG. 6B) through which the system 100 can receive multiple preferred criteria associated with the job. For example, the user interface module 122 can display the sixth portion in user interface 600a or in another user interface 600b (FIG. 6B). As described below, the system 100 can modify a rank associated with each candidate for the job based on weights associated with one or more preferred criteria that each candidate does or does not satisfy.

Having received the multiple job criteria, the system 100 can search for persons who at least partially satisfy the multiple job criteria and can therefore be candidates for the job. In some implementations, the system 100 can search social associations of multiple persons included, for example, in profiles created by the multiple persons on social network websites. As described above, a person can create a profile on a social network website, and, in the profile, include social associations, i.e., electronic connections, between the person's profile and profiles of other entities (for example, other people, organizations, groups, and others). Exemplary social associations can be formed when the person adds another entity as a contact, becomes friends with another entity, follows another entity, joins the same group as another entity, follows the same entity as the other entity, or likes or favorites another entity, among others. The formation of each social association can be a respective computer-implemented operation; each social association can be stored on a computer-readable storage medium.

Also, as described above, examples of social networks include Facebook™ (provided by Facebook, Inc. of CA), LinkedIn™ (provided by LinkedIn, Inc. of CA), Xing™ (provided by Xing AG of Germany), to name a few. Each website can be hosted by a computer server system that receives the social associations of the persons and stores the social associations on one or more computer-readable storage media in respective formats. That is, a format in which a computer server system that hosts www.facebook.com stores social associations of entities can be different from a format in which a computer server system that hosts www.linkedin.com stores social associations of entities.

To search social associations of persons to identify candidates for the job, the system 100 can implement the search module 124 to identify multiple computer-readable storage media, each of which stores social associations of respective multiple persons in a respective format. For example, the search module 124 can identify external computer server systems 110 that host social network website such as those described above, and additionally identify internal computer server systems 114 that host social associations of entities (including persons employed by the organization). In some implementations, the user can specify one or more the external computer server systems 110 or the internal computer server systems 114 or combinations of them. For example, the user interface module 122 can display multiple controls that each identifies an external computer server system that hosts a social network website. The user can select one or more controls that identify respective one or more external computer server systems. The user interface module 122 can additionally display a control that identifies the internal computer server system 114, which the user can select. In this manner, the user (or the system or both) can perform an exhaustive search of multiple computer server systems or a relatively limited search of less than all computer server systems for candidates for the job.

The system 100 can identify a computer-readable storage medium connected to each computer server system that the user selected. The system 100 can identify the computer-readable storage medium after the user has selected the computer server systems. By doing so, the system 100 can identify the most recent social associations stored on the computer-readable storage medium, i.e., social associations that have been most recently modified by persons to whom the social associations are associated.

In some implementations, the system 100 can implement a transformation module 506 that can transform a format in which the multiple job criteria are stored into a format in which each of the identified computer-readable storage media stores social associations of persons. Alternatively, or in addition, the system 100 can transform social associations stored in each identified computer-readable storage medium into a format in which the system 100 stores the multiple job criteria. The content in which each of the identified computer-readable storage media stores the social associations of persons can be substantially the same. However, the semantics (i.e., the format) in which each of the identified computer-readable storage media stores the content can be different. The transformation module 506 can map the multiple job criteria and the social associations stored in each of the identified computer-readable storage media into a common format to facilitate searching.

The search module 124 can search each computer-readable storage medium for a person who has at least some social associations that match at least some of the multiple job criteria by comparing the multiple job criteria, transformed into the respective format of each computer-readable storage medium with social associations of the multiple persons stored in each computer-readable storage medium. For example, the search module 124 can search profiles of persons stored on each computer-readable storage medium for social associations that satisfy each of the multiple job criteria. The system 100 can provide persons identified in response to searching each computer-readable storage medium as job candidates for the job. Alternatively, or in addition, the search module 124 can transmit a request to each computer server system that is connected to each identified computer-readable storage medium requesting that each computer server system search the respective computer-readable storage medium for a person or persons who can be job candidates. To aid each computer server system in the search, the search module 124 can transmit the multiple job criteria, transformed into a respective format of each computer server system, to the computer server system. The system 100 can receive persons identified by each computer server system as job candidates and provide the identified job candidates.

If the search module 100 finds all of the multiple job criteria in a first profile, then a first person identified in the first profile may be an ideal candidate for the job. If the search module 100 finds at least some of the multiple job criteria in a second profile, then a second person identified in the second profile may also be a candidate for the job, although not as ideal as the first person. In this manner, the search module 100 can identify several candidates who have social associations that match the multiple job criteria at varying levels. The search module 122 can rank the job candidates identified in response to the searching based on matches between social associations of the job candidates and the multiple job criteria. The search module 122 can rank the job candidates in a unified (for example, single) list of candidates even though the profiles of each candidate may reside on various different platforms.

To rank the identified job candidates, the search module 100 can implement a ranking module 508 that can assign a match (for example, a percentage match) for each job candidate to the requirements of the job. For example, for each job candidate, the ranking module 508 can search respective social associations to determine a number of job criteria that each job candidate satisfies. The ranking module 508 can rank the job candidates according to the number of job criteria that the ranking module 508 determines for each candidate. In some implementations, the ranking module 508 can transform the numbers of job criteria determined for the job candidates into corresponding percentages, for example, by dividing each number of job criteria determined for each candidate by a total number of job criteria. In some implementations, the ranking module 508 can rank the job candidates on a scale, for example, a scale of 0-5.

In some implementations, the ranking module 508 can modify a rank assigned to each candidate based on the preferred criteria associated with the job that were received from the user as described above. For example, the ranking module 508 can associate a weight with each preferred criteria. The ranking module 508 can modify a rank of a job candidate based on one or more weights of the one or more preferred job criteria that each job candidate satisfies. For example, work experience as "Senior Sales Consultant" for at least for years can have a greater weight than a diploma (grade) better than two. The ranking module 508 can associate a weight, for example, of 1.4 with the work experience preferred criterion and a relatively lesser weight, for example, of 1, with the diploma preferred criterion. Compared to the work experience preferred criterion and the diploma preferred criterion, the ranking module 508 can associate a relatively greater weight, for example, of two, with a preferred criterion of having a dedicated competitor in the list of former employees.

As described above, the search module 124 can search social associations of persons included in profiles hosted by the external computer server systems 110 and the internal computer server system 114. Thus, the search module 124 can search internal computer-readable storage media that stores social associations of persons who are internal to the organization and also external computer-readable storage media that stores associations of persons who are external to the organization. A subset of the job candidates that the search module 124 identifies in response to the search can be persons who are internal to the organization. Remaining job candidates that the search module 124 identifies in response to the search can be persons who are external to the organization.

A particular person who is internal to the organization can create an internal profile on the social network hosted by the internal computer server system 114 and an external profile on the social network hosted by the external computer server system 110. The search module 124 can identify the particular person as a job candidate twice - once by searching the internal computer server system 114 and once by searching the external computer server systems 110. Similarly, the particular person can create a profile on two separate social networks and can consequently be identified as a job candidate twice in response to a search of the two separate social networks.

Rather than identifying the same person twice as job candidates for the job, the system 100 can merge the two persons into a single job candidate. To do so, in some implementations, the system 100 can determine that a particular person who is among the persons who are internal to the organization is also among persons who are external to the organization. Alternatively, or in addition, the system 100 can determine that a particular person who was identified in one external computer server system 110 was also identified in another external computer server system 110. The system 100 can merge social associations of the particular person included in the profile hosted by the different computer server systems. For example, the system 100 can merge the social associations included in the profile hosted by the internal computer server system 114 with social associations of the particular person included in the profile hosted by the external computer server systems 110 resulting in merged social associations of the particular person. The system 100 can then compare the multiple job criteria with the merged social associations to determine if the particular person is a job candidate.

To merge the social associations, the system 100 can identify first social associations of the particular person that are stored in the computer-readable storage media connected to the internal computer server system 114 but not in the computer-readable storage media connected to the external computer server system 110. The system 100 can additionally identify second social associations of the particular person that are stored in the computer-readable storage media connected to the external computer server systems 110 but not in the computer-readable storage media connected to the internal computer server system 114. The system 100 can include the first social associations and the second social associations in the merged social associations, which will include the social associations of the person that are in the profile that is internal to the organization and external to the organization. For example, by comparing certain criteria (such as name, address, e-mails), the system 100 can propose a merge of information. If, for example, 95% of the key criteria matches, then the system 100 can determine to merge those criteria that are a 70%-95% match and exclude those criteria that are less than 50% match.

In the example implementation described above, the system 100 merged social associations of a person prior to determining whether at least some of the merged social associations matched at least some of the job criteria. In other implementations, the system 100 can first determine that at least some of social associations of the same person hosted by multiple social network websites match some of the multiple job criteria resulting in the same person being identified as a job candidate pursuant to searches of the multiple social network websites. The system 100 can then merge the social associations of the person before providing the person as a job candidate for the job. By implementing the techniques described above, the system 100 can receive multiple job criteria from the user, search for job candidates that at least partially match the received multiple job criteria, and provide the identified job candidates to the user.

In some implementations, rather than identifying the same person twice as job candidates for the job, the system 100 can identify the person once as a job candidate and provide either the social associations stored on the external computer server systems 110 or on the internal computer server system 114. For example, the system 100 can compare the profiles hosted by the multiple computer server systems to identify one profile that includes the social associations. The system 100 can select the profile that is most recent or that is hosted by a professional social network website (as opposed to a personal social network website) or that has more social associations that match at least some of the multiple job criteria or that has more social associations or combinations of them.

The system 100 can implement additional techniques to search for job candidates. For example, the system 100 can identify candidate referrers by implementing the techniques described above, provide the multiple job criteria to the candidate referrers, and request referrals for candidates for the job from each candidate referrer. To provide the multiple job criteria to each candidate referrer, the system 100 can generate a job profile based on the multiple criteria received through the one or more user interfaces (for example, user interface 600a).

In some implementations, the user interface module 122 can display a user interface 600b (FIG. 6B) that can display a job profile generated based on the multiple job criteria received through user interfaces such as user interface 600a. In the user interface 600b, the user interface module 122 can display a "Job Description" portion 614 that can include a control 616, a selection of which can be an input to generate a job profile. When the user selects the control 616, the system 100 can automatically generate a job profile based on the multiple job criteria. The display generation module 124 can display the job profile in the "Job Description" portion. The display generation module 124 can additionally display a "Language" control 618. The system 100 can generate the job profile in one or more languages based on the user's selection of a language using the "Language" control 618.

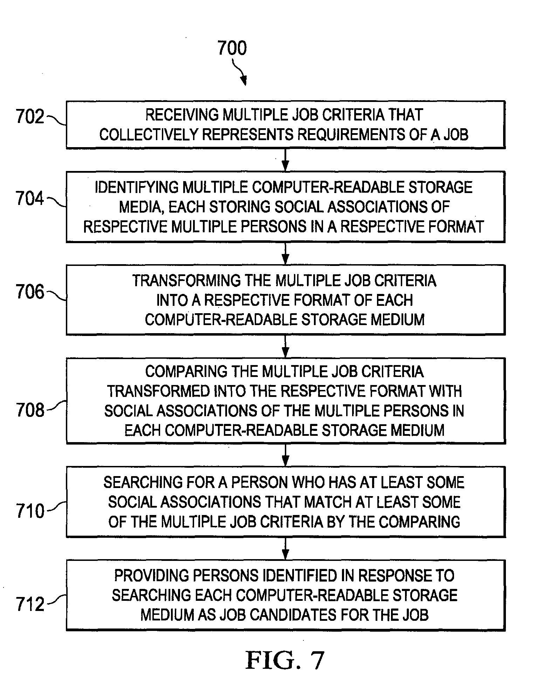

FIG. 7 is a flowchart of a process 700 for searching for candidates for a job. The process 700 can be implemented as computer instructions stored on computer-readable media (for example, the computer-readable medium 502) and executable by data processing apparatus (for example, data processing apparatus 504). For example, the process 700 can be implemented by the system 100 to search for candidates for a job. At 704, multiple job criteria that collectively represent requirements of a job can be received, for example, through one or more user interfaces. At 704, multiple computer-readable storage media can be identified. Each identified computer-readable storage medium stores social associations of respective multiple persons in a respective format. At 706, the multiple job criteria can be transformed into a respective format of each computer-readable storage medium. At 708, the multiple job criteria transformed into the respective format can be compared with social associations of the multiple persons in each computer-readable storage medium. At 710, a search can be performed for a person who has at least some social associations that match at least some of the multiple job criteria. At 712, persons identified in response to searching each computer-readable storage medium can be provided as job candidates for the job. Persons identified by performing the search can be ranked according to matches to the job criteria.

As described above, some techniques to identify job candidates include searching for job candidates on social network websites and on computer server systems that are internal to the organization. Additional techniques can include generating a job profile and circulating the job profile to one or more candidate referrers. Other techniques can include directly contacting one or more entities in the search for job candidates. The job candidates identified by implementing the various search techniques and information describing the job candidates including each candidate's ranking can be presented, for example, on display devices connected to the internal computer system 102 or the external computer system 106 (or both) by implementing techniques described in Section IV.

### IV. Presenting a Unified Search Result of External and Internal Candidates

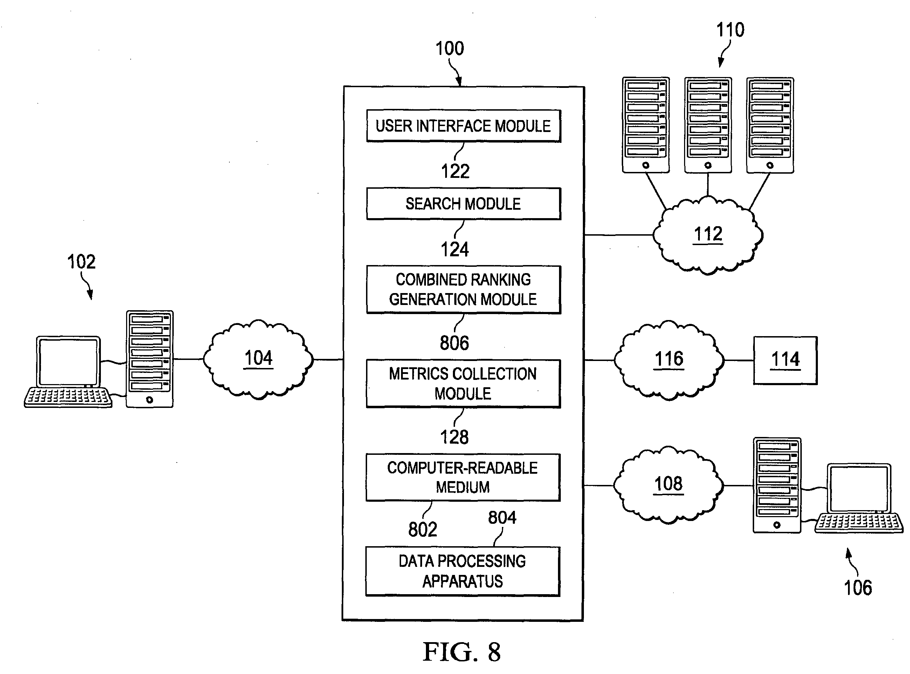

FIG. 8 illustrates an example of the system 100 for presenting candidates for a job. The system 100 can include a computer-readable medium 802 that can store computer instructions executable by data processing apparatus 804 to present candidates for a job that have been identified in response to a search for the candidates as described above.

In some implementations, the system 100 can receive input to search for candidates for a job in an organization, for example, from a user (such as the HR representative). As described above, the system 100 can search social associations of persons stored on computer-readable storage media connected to external computer server systems 110 or internal computer server systems 114 (or both) for persons having at least some social associations that match at least some of the multiple job criteria that collectively represent requirements of the job. The system 100 can additionally receive job candidates from candidate referrers to whom the system 100 sent requests for referrals as described above. Moreover, the system 100 can receive job candidates in response to other searches, for example, in response to contacting one or more persons, or from persons who directly contact the organization themselves. All job candidates identified by the techniques described above can be provided to the user as results of a search for job candidates for the job.

By implementing the techniques described below, the system 100 can display the search results in one or more user interfaces, for example, as a common, unified list, in response to receiving an input requesting the search results. In the search results, the system 100 can include information describing one or more of the identified candidates, an indicator of a match of each of the one or more of the identified candidates to the job, and an indicator of a match of each of the one or more of the identified candidates to internal members of the organization. As described below, the system 100 can display the search results in a unified results user interface that displays information describing job candidates obtained from multiple computer server systems.

The input requesting the search results can include an input to search for candidates for the job in the organization. In response to receiving the input, the system 100 can implement the search module 124 to identify two sets of data - a first set of data ("first data") describing multiple first job candidates, each of whom is internal to the organization, and a second set of data ("second data") describing multiple second job candidates, each of whom is external to the organization. Each internal job candidate is a candidate for the job in the organization and is internal to the organization. An internal candidate can be, for example, a person who is employed by the organization in the department with the job to be filled, and may be eligible to be transferred from a current job to the job to be filled. An internal candidate can also be, for example, a person who is in a different department from the department with the job to be filled, and may be eligible to be transferred from a current job with the different department to the department with the job. Conversely, each external candidate is a candidate for the job in the organization and is external to (i.e., presently not associated with) the organization.

The first data can include at least one of an internal job candidate identifier, social associations associated with an internal job candidate, or a department within the organization with which the internal job candidate is associated, or combinations of them. The internal job candidate identifier can include, for example, a name of an internal job candidate. The social associations associated with the internal job candidate can include at least one of an education, an experience, or languages known or combinations of them. The second data can include at least one of an external job candidate identifier, social associations associated with an external job candidate, a present employer of the external job candidate, or an identifier identifying a location in which social associations of the external job candidate are stored, such as, a Uniform Resource Locator (URL) that references a webpage of a social network website that hosts the external job candidate's profile or combinations of them.

As described above, the system 100 can rank each of the job candidates according to a respective match to the job. For example, the system 100 can compare multiple job criteria that collectively represent requirements for the job with social associations of each internal job candidate and determine a rank of each internal job candidate based on the comparing. Similarly, the system 100 can compare the multiple job criteria that collectively represent requirements for the job with social associations of each external job candidate, and determine a rank of each external job candidate based on the comparing. In some implementations, to rank each job candidate, the system 100 can determine a number of job criteria that each job candidate satisfies. The system 100 can rank the job candidate according to the number of satisfied job criteria. In some implementations, the system 100 can implement a metrics collection module 128 to collect the numbers of job criteria for each candidate. The system 100 can transform the numbers of job criteria determined for the job candidates into corresponding percentages, for example, by dividing each number of job criteria determined for each candidate by a total number of job criteria. In some implementations, the system 100 can normalize the numbers to a scale, for example, a scale of 0-5.

By implementing the ranking techniques described above, the system 100 can receive a first ranking of the multiple internal job candidates according to a respective match of each internal job candidate to the job. Similarly, the system 100 can receive a second ranking of the multiple external job candidates according to a respective match of each external job candidate to the job. Alternatively, or in addition, the system 100 can receive the first ranking or the second ranking (or both) from a third-party computer system that is configured to rank the respective job candidates according to a respective match to the job and to provide the first ranking or the second raking (or both) to the system 100.

To present unified search results that show candidates for the job identified from multiple computer server systems, the system 100 can implement a combined ranking generation module 806 that can generate a combined ranking by combining the first ranking and the second ranking. In some implementations, the combined ranking generation module 806 can combine the data describing the internal job candidates and the data describing the external job candidates, and rank the combined job candidates according to matches of the job criteria. The user interface module 122 can present the combined job candidates ranked as described above. The user interface module 122 can additionally present whether a candidate is internal or external to the organization. The system 100 can use the indication of whether the candidate is internal or external to the organization as a criterion to filter the combined job candidates presented by the user interface module 122.

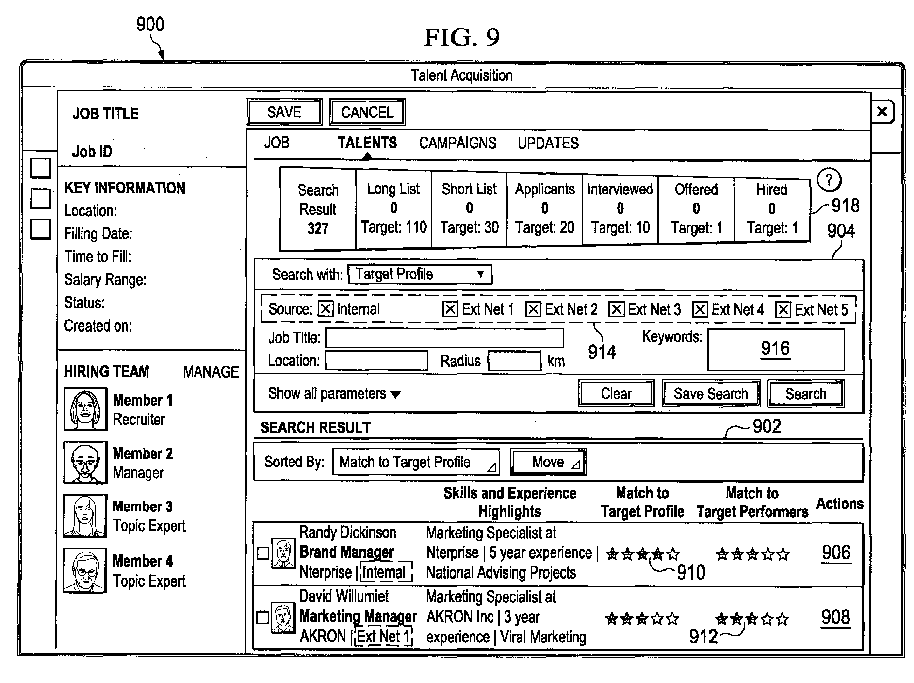

The system 100 can provide one or more of the multiple internal job candidates and one or more of the multiple external job candidates in a user interface such as user interface 900 (Fig. 9) according to the combined ranking of the candidates. For example, the system 100 can implement the user interface module 122 to display, in a first portion 902 of the user interface 900, one or more job criteria of the multiple job criteria that collectively represent requirements of the job. In a second portion 904 of the user interface, the user interface module 122 can display multiple identifiers of multiple computer server systems that were searched to identify the multiple internal job candidates and the multiple external job candidates. For example, the user interface module 122 can display Uniform Resource Locators (URLs) of each social network website in the second portion 904.

In some implementations, the user interface module 122 can display a control (for example, a check box) next to the identifier of each computer server system as shown in a third portion 914. The user can select one or more of the controls to select corresponding one or more computer server systems. In response, the system 100 can filter the data describing the internal job candidates and the external job candidates to display only the data obtained by searching the selected one or more computer server systems. In a fourth portion 914, the user interface module 122 can display controls (for example, text boxes) into which the user can provide filtering criteria, for example, a job title, location, distance from the job location, keywords, or combinations of them. The user can provide one or more of the filtering criteria in response to which the system 100 can filter the data describing the internal job candidates and the external job candidates to display only the data that matches the filtering criteria.

In the first portion 902, the user interface module 122 can display data describing each job candidate in a respective portion. For example, in the fifth portion 906, the user interface module 122 can display data describing an internal job candidate, some of the social associations of the internal job candidate, and a metric 910 for the internal job candidate that represents a match of the internal job candidate to the job.

The system 100 can additionally implement the metrics collection module 128 to determine metrics to compare each job candidate for the job with a top performer of a substantially similar job. A top performer can be a current employee of the organization that has an existing job that is substantially similar to the job for which the job candidates have been identified. The organization (for example, the department in which the current employee is employed or the HR department or both) can previously have identified one or, usually, multiple employees as top performers. In some implementations, the system may assemble out of those top performers a kind of "virtual profile" containing the most significant and most consistent criteria from the individuals. This "virtual profile" may be than used for further comparison of found (search) candidates. The metrics that compare each job candidate with the virtual profile of top performers can provide the organization a likelihood that a job candidate will succeed if hired for the job. By comparing each of the multiple internal job candidates and each of the multiple external job candidates to the virtual profile being assembled from top performers of the organization, the system can determine a further metric indicating the likelihood of success in the job. In a sixth portion 912, the user interface module 122 can display describing an external job candidate, some of the social associations of the external job candidate, and a metric 912 for the external job candidate that represents a match of the external job candidate to a top performer.

In some implementations, the user interface module 122 can display a talent pipeline 918 in the user interface 900. The talent pipeline 918 can provide a graphical representation of a talent acquisition process and can include different phases from the initial search to the hiring of the talent. For example, the talent pipeline 912 can include phases of search results that include long and short lists, job candidates interviewed, job candidates offered jobs, and job candidates hired. The graphical representation of the phases may also include a target quantity that can represent a desired quantity for the particular phase and an actual quantity that may represent the current quantity for the particular phase. Additional information regarding a talent pipeline is described in U.S. Application Serial No. 13/603,149 entitled "Talent Acquisition System and Method" (filed on September 4, 2012), the entire contents of which are incorporated herein by reference in its entirety.

In the example implementation described above, the first data and the second data described multiple candidates that were internal and external to the organization, respectively. In some implementations, the first data and the second data can each describe multiple candidates that are external to the organization. In such implementations, the first job candidates can be candidates identified by searching a first computer server system that is external to the organization and the second job candidates can be candidates identified by searching a second computer server system that is external to the organization and different from the first computer server system. For example, the first computer server system and the second computer server system can host a first social network website and a second social network website, respectively.

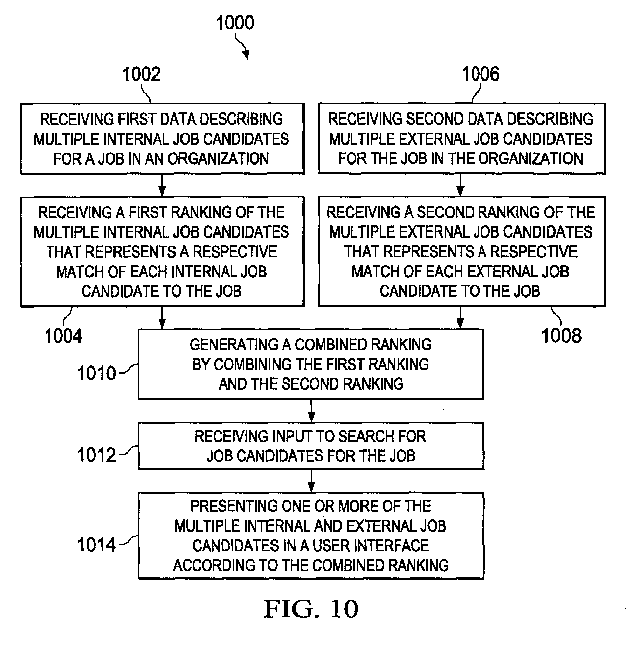

FIG. 10 is a flowchart of a process 1000 for presenting candidates for a job. The process 1000 can be implemented as computer instructions stored on computer-readable media (for example, the computer-readable medium 802) and executable by data processing apparatus (for example, data processing apparatus 804). For example, the process 1000 can be implemented by the system 100 to present candidates for a job. At 1002, first data describing multiple internal job candidates for a job in an organization can be received. At 1004, a first ranking of the multiple internal job candidates that represent a respective match of each internal job candidate to the job can be received. At 1006, second data describing multiple external job candidates for the job in the organization can be received. At 1008, a second ranking of the multiple external job candidates that represents a respective match of each external job candidate to the job can be received. The search for and receipt of the first data at 1002, the first ranking at 1004, the second data at 1006, and the second ranking at 1008 can occur in parallel, for example, simultaneously. At 1010, a combined ranking can be generated by combining the first ranking and the second ranking. At 1012, input to search for job candidates for the job can be received. At 1014, one or more of the multiple internal and external job candidates can be presented in a user interface according to the combined ranking.

The user (for example, the HR representative) can select one or more of the job candidates displayed in the user interface 900. To do so, the user can position a position indicator (for example, a mouse cursor or a finger or stylus in a touchscreen). In response, the system 100 can display information describing the selected job candidate in another user interface as described below. The information describing the selected job candidate can include one or more endorsers who can endorse the job candidate for the job, for example, recommend the job candidate's suitability for the job to the organization. Techniques for identify such endorsers who can provide a recommendation of the suitability of a particular job candidate to the particular job in the organization are described in the following section.

### V. Identifying Endorsers for a Candidate

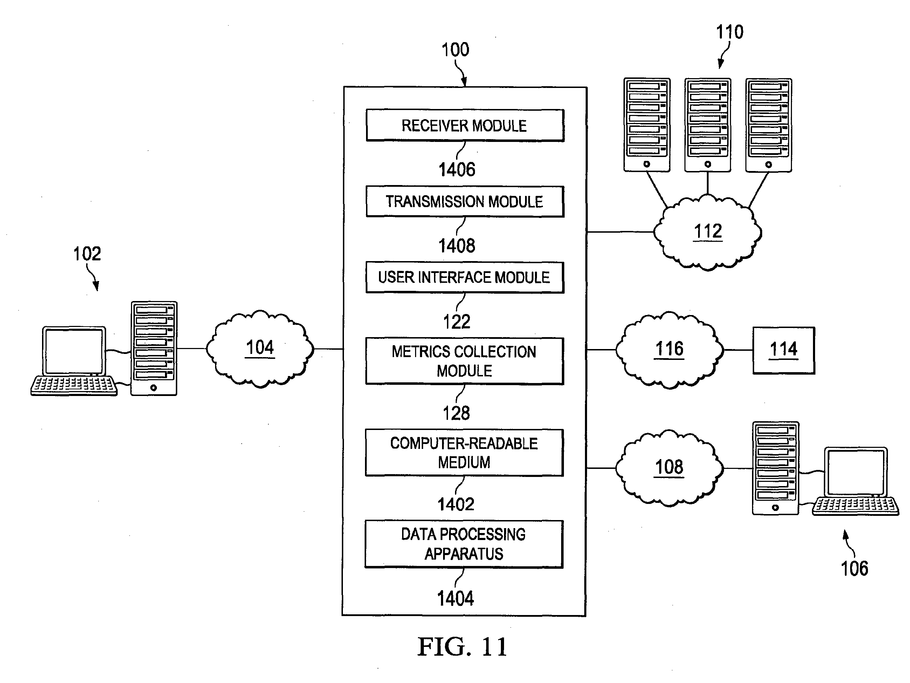

FIG. 11 illustrates an example of the system 100 for identifying an endorser of a candidate for a job. An endorser can be an entity (for example, a person or an organization) which has sufficient knowledge about the candidate, the organization in general, and the job in specific, to be able to provide an informed suggestion to the organization about whether the candidate will be a good fit not only for the job but also for the organization. The endorser can therefore be a person who is or should be close to the organization or to the department with the job to fill (or both), and the candidate. The system 100 can include a computer-readable medium 1102 that can store computer instructions executable by data processing apparatus 1104 to identify one or more endorsers of a candidate and seek an endorsement for the candidate from each of the one or more endorsers by performing operations described below.

As described above, the system 100 can implement techniques to identify a candidate for a job in the organization by searching social associations of persons. As described above, a person can create a profile on a social network website, for example, Facebook™ (provided by Facebook, Inc. of CA), LinkedIn™ (provided by LinkedIn, Inc. of CA), Xing™ (provided by Xing AG of Germany), to name a few. The person's profile can include social associations, i.e., electronic connections, between the person's profile and profiles of other entities (for example, other people, organizations, groups, and others). Exemplary social associations can be formed when the person adds another entity as a contact, becomes friends with another entity, follows another entity, joins the same group as another entity, follows the same entity as the other entity, or likes or favorites another entity, among others.

As described above, the system 100 can compare social associations of each of multiple persons with multiple job criteria that collectively represent requirements for the job. Based on the comparing, the system 100 can determine one or more persons as candidates at least some of the multiple job criteria. For example, the system 100 can identify each candidate based at least in part on the social associations of the candidate that satisfy at least some of the multiple job criteria. In addition, the organization can receive additional candidates from one or more of the referrers (described above) or in response to soliciting one or more persons (for example, directly), or both. The organization (for example, the HR department) can evaluate each of the one or more candidates to identify a candidate for the job.

Evaluation of the multiple candidates identified as satisfying some of the multiple criteria associated with the job can include filtering the multiple candidates across multiple evaluation stages. For example, as described with reference to the talent pipeline 918 above, the system 100 can receive multiple job candidates as search results in response to a search for candidates. The system 100 can filter the multiple job candidates in a first stage to generate a long list of candidates that includes fewer than all the of the multiple job candidates. The system 100 can further filter the job candidates to generate a short list that includes fewer than all of the job candidates in the first stage. The system 100 can continue to filter the job candidates to select a pool of applicants that includes fewer job candidates than in the second stage. The system 100 can select a subset of the pool of applicants to interview, make an offer to less than all of the candidates in the subset, and eventually hire a person for the job.

To filter the candidates through the multiple stages, the system 100 can rely upon several criteria in addition to matches of the social associations of each candidate to the multiple job criteria. For example, the system 100 can use a rank of each candidate that represents a match of the candidate to the multiple job criteria. The system 100 can additionally use the preferred criteria specified by the user (for example, the HR representative) to modify the rank. One such criterion that the system 100 can use to filter the candidates includes endorsements received from endorsers of the candidates. As described below, the endorsers can be determined from the social associations of the candidates.

In some examples, a social network website can include an option for a candidate to specify one or more endorsers such as current or previous employers or business associates (or both). In such examples, the system 100 can search the candidate's social associations included in the candidate's profile on the social network website and identify the one or more endorsers that the candidate has identified as endorsers. In some examples, a candidate's profile can include the candidate's resume which, in turn, can include one or more endorsers listed as "references" for the candidate. The system 100 can search the candidate's resume to identify the one or more endorsers. Alternatively, or in addition, if the candidate is a member of a group (such as a professional group), then another member of the group can have commented about the candidate's expertise, skills, and the like, on the candidate's profile, and consequently be an endorser for the candidate. The system 100 can identify the entity that provided the comments in the candidate's profile as an endorser of the candidate. In some examples, one or more persons familiar with the candidate can post comments on the candidate's profile describing the candidate, more particularly, the candidate's professional qualifications, skills, and the like. The system 100 can identify each of these persons as an endorser from whom an endorsement of the candidate can be sought.

However, not all endorsements of a candidate received from an endorser may be relevant to the job. For example, if interactions between a candidate and the candidate's endorser are unrelated to the organization in general or to the job in specific or both, then endorsements received for the candidate from the endorser may not be relevant to the job. To identify an entity (or entities) from among a candidate's social associations which can provide an endorsement that is relevant to the job or the organization (or both), the system 100 can identify data describing an entity with social associations that are at least partly associated with some of the multiple job criteria and at least partly associated with some of the social associations of the organization.

To identify such endorsers, the system 100 can initially analyze (for example, search) the social associations of a candidate to identify one or more endorsers who can provide any type of endorsement for the candidate regardless of the endorsement's relevance to the job or the organization. Each entity can have a profile on a social network website that includes social associations of the entity. Then, the system 100 can determine whether the endorser can provide an endorsement that is relevant to the job or the organization (or both) by comparing the social associations of the entity with the multiple job criteria to determine whether some of the social associations of the entity satisfy some of the job criteria. For example, if the entity is a person who is in the same industry as the job, is presently or was previously employed in a job that has substantially similar requirements as the job in the organization, has some of the skills or expertise preferred for the job, or has similar education as preferred for the job (or combinations of them), then the system 100 can determine that some of the social associations of the entity satisfy some of the multiple job criteria.

The system 100 can additionally compare the social associations of the entity with the social associations of the organization. The system 100 can identify the social associations of the organization from one or more profiles created on the one or more social network websites. Alternatively, or in addition, the system 100 can identify the social associations of the organization from the internal computer server system 114 that stores (or hosts) the social associations. For example, if the entity is a person who is or was previously employed by the organization, was in the same department as the department with the job, was in a similar job with a different department in the organization (or combinations of them), then the system 100 can determine that some of the social associations of the entity satisfy some of the social associations of the organization. The system 100 can provide the data describing the entity (or entities) identified by implementing the techniques described above as an endorser (or endorsers) who can endorse the candidate for the job.

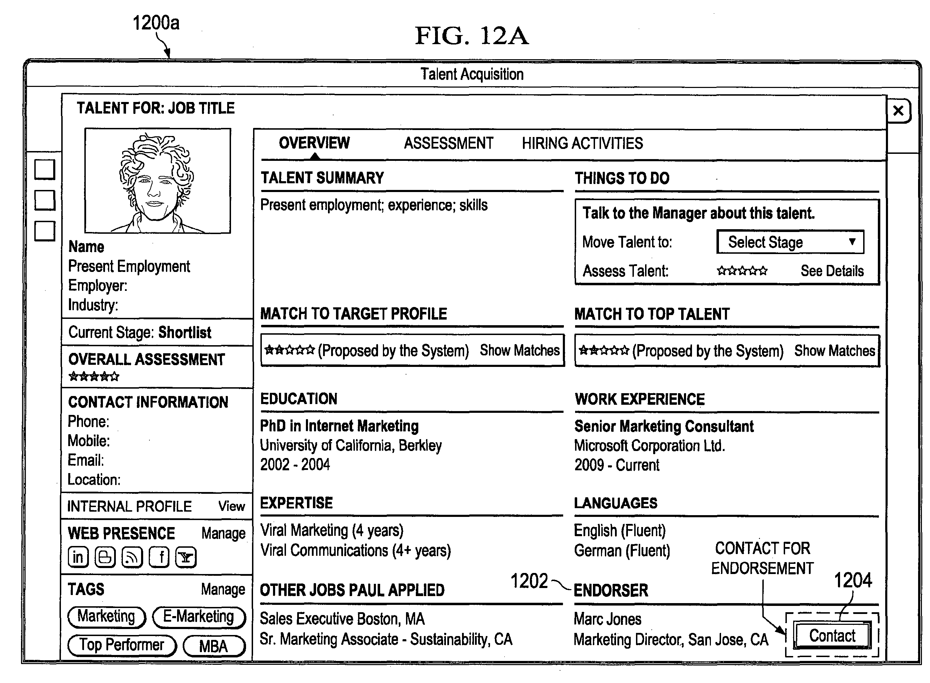

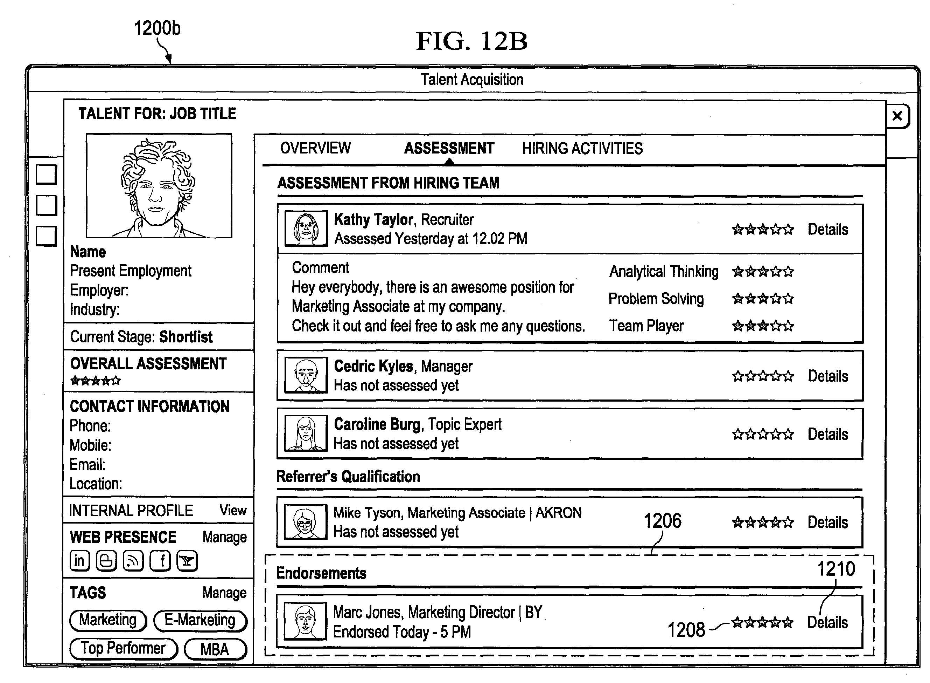

In some implementations, the system 100 can implement the display generation module 122 to display, in a user interface (for example, user interface 1200a shown in FIG. 12A, user interface 1200b shown in FIG. 12B, and the like), data describing the candidate for the job. For example, the display generation module 122 can display the user interface in a display device connected to a computer system such as the input computer system 102 or the output computer system 108 or both. As shown in user interface 1200a, the data that the display generation module 122 displays can include at least some of the multiple job criteria that the candidate satisfies. For example, the data can include personal information (such as name, contact information, and the like), professional information (such as present employment, employer, industry), one or more social network websites that include social associations of the candidate, a summary of the candidate's talent (such as the social associations that match the job criteria), the candidate's ranking (such as match to the requirements of the job or to internal top performers or both), or combinations of them.

The display generation module 122 can additionally display, in the user interface 1200a, the data describing the person provided as the endorser. In some implementations, the display generation module 122 can display an endorser portion 1202 in the user interface 1200a, and display the data describing the endorser in the endorser portion 1202. For example, the display generation module 122 can display personal information (such as a name, contact information) of the endorser, professional information (such as current employment) about the endorser, and the like.

In addition, the display generation module 122 can display, in the user interface 1200a, a control 1204 configured to receive a selection. In some implementations, the system 100 can detect the selection of the control button. For example, the user (such as the HR representative) can select the control 1204 using a position indicator (such as mouse cursor or a stylus or finger in a touchscreen). In response to detecting the selection, the display generation module 122 can display another user interface to transmit a notification to the endorser described by the data in the endorser portion 1202. As described below, the notification to the endorser can include a request to provide an endorsement for the candidate described by the data displayed in the user interface 1200a.

In some implementations, the system 100 can implement a transmission module 1108 that can transmit a request to the person provided as the endorser for the endorsement for the candidate for the job. For example, the transmission module 1108 can be implemented as computer instructions stored on the computer-readable medium 1102 and executed by the data processing apparatus 1104 to transmit the request to the endorser.

The system 100 can determine contact information for the endorser from the endorser's social associations. For example, the system 100 can determine an electronic mail (e-mail) address of the person provided as the endorser by searching the social associations of the endorser. The transmission module 1108 can transmit an e-mail message to the e-mail address that the system 100 determined. The e-mail message can include text identifying the organization, the job, and the candidate, and requesting that the endorser provide an endorsement for the candidate for the job. The e-mail message can include a return e-mail address to which the endorser can transmit a reply. In another example, the system 100 can generate a webpage of a website that includes one or more user interfaces into which an endorser can provide the endorsement. The system 100 can store the webpage on a computer-readable medium (for example, the computer-readable medium 1102) and reference the webpage by a Uniform Resource Locator (URL). The transmission module 1102 can transmit the URL that identifies the webpage to the endorser, for example, as part of the e-mail message described above.

Through either the e-mail message or the one or more user interfaces included in the webpage, the system 100 can request endorsements for the candidate from the endorser. In some implementations, the user can generate a questionnaire including multiple questions, each of which pertains to a suitability of the candidate for the job in the organization. The system 100 can store the questionnaire, for example, on the computer-readable medium 1102. In some examples, the question can request the endorser to rate the candidate on a scale (such as 0-5) for a particular quality that is relevant to the job (such as skills, expertise, personal traits such as attitude or teamwork, and the like). Alternatively, or in addition, the question can request the endorser to rate the candidate for a particular quality that is relevant to the organization (such as team work, ability to work independently, and the like). In some examples, the question can ask the endorser to describe, in words, a quality or qualities of the candidate that are relevant to the job or the organization or both. The transmission module 1108 can transmit the questionnaire to the endorser, who can access and view the questionnaire in one or more user interfaces, each of which is configured to receive the endorser's response to one or more of the questions.

The system 100 can implement a receiver module 1106 that can receive one or more endorsements of a candidate from one or more endorsers to whom the transmission module 1108 transmitted requests for endorsements as described above. The receiver module 1102 can be implemented as computer instructions stored on the computer-readable medium 1102 and executed by the data processing apparatus 1104 to receive responses from endorsers. For example, the receiver module 1106 can receive an e-mail message in reply to the e-mail message that the transmission module 1108 transmitted to the endorser requesting an endorsement. Alternatively, or in addition, the receiver module 1106 can determine that an endorser has accessed the webpage that includes the one or more user interfaces into which the endorser can provide the endorsement, and has provided responses to questions displayed in the one or more user interfaces.

By implementing the techniques described above, the system 100 can receive endorsements for candidates either in response to requests transmitted to endorsers. In some implementations, the display generation module 122 can display an endorsement (or endorsements) received from an endorser in a user interface (for example, the user interface 1200b) in an endorsements portion 1206. The metrics collection module 128 can evaluate each endorsement to determine a relevance metric to the job or the organization. In addition, the metrics collection module 128 can determine a combined metric representing all endorsements from all endorsers. For example, the metrics collection module 128 can determine a total and a simple average across all endorsements for each quality. If all endorsers provide positive endorsements for the candidate, each endorsement being relevant to the job and the organization, then the combined metric can be a five-star rating. Conversely, if all endorsers provide negative endorsements for the candidate, then the combined metric can be a zero-star rating. In this manner, the metrics collection module 128 can determine a rating in the range of zero-star to five-star for the candidate based on the quality of relevant endorsements received from one or more endorsers. The display generation module 122 can display the relevance metric 1208 in the user interface 1200b.

The display generation module 122 can additionally display a "Details" control 1210 in the endorsement portion 1206. The "Details" control 1210 can represent a link (for example, a hyperlink) to one or more user interfaces that display detailed information about all the endorsements received for the candidate, for example, the textual descriptions of a quality or qualities of the candidate that are relevant to the job or the organization or both. In response to detecting a selection of the "Details" control 1210, the display generation module 122 can display one or more user interfaces, each of which displays the endorsements in detail, for example, the textual descriptions, answers to each question in the questionnaire, or combinations of them. In this manner, the system 100 can identify an endorser for one or more candidates for the job, provide data describing the endorser to the user (for example, the HR representative), transmit requests for endorsements to the endorsers, and display the endorsements to the user.

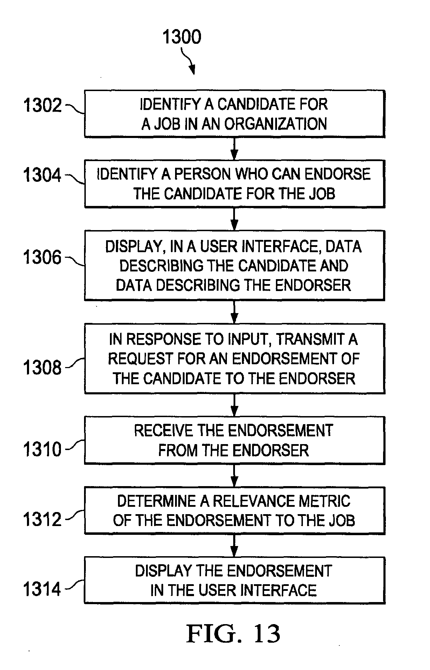

FIG. 13 is a flowchart of a process 1300 for identifying an endorser of a candidate for the job. The process 1300 can be implemented as computer instructions stored on computer-readable media (for example, the computer-readable medium 1102) and executable by data processing apparatus (for example, data processing apparatus 1104). For example, the process 1300 can be implemented by the system 100 to search for candidates for a job. At 1302, a candidate for a job in an organization can be identified. At 1304, a person who can endorse the candidate for the job can be identified. At 1306, data describing the candidate and data describing the endorser can be displayed in a user interface. At 1308, a request for an endorsement of the candidate can be transmitted to the endorser in response to input. At 1310, the endorsement can be received from the endorser. At 1312, a relevance metric of the endorsement to the job can be determined. At 1314, the endorsement can be displayed in the user interface. Using the data describing the multiple job candidates, the ranking determined for the multiple job candidates, and endorsements received from the endorsers, the user (for example, the HR representative, the HR department, the department with the job to fill, the organization, or combinations of them) can evaluate the multiple job candidates with a view to hiring one of the candidates for the job.

As described above, one technique to identify job candidates is through referrals from referrers. By implementing techniques described below, the system 100 can present the referrers to whom requests for referrals were sent in a manner that can allow the organization (for example, the HR department) to visualize a degree of association between a referrer and the organization.

### VI. Presenting Referrers According to Degrees ofAssociation

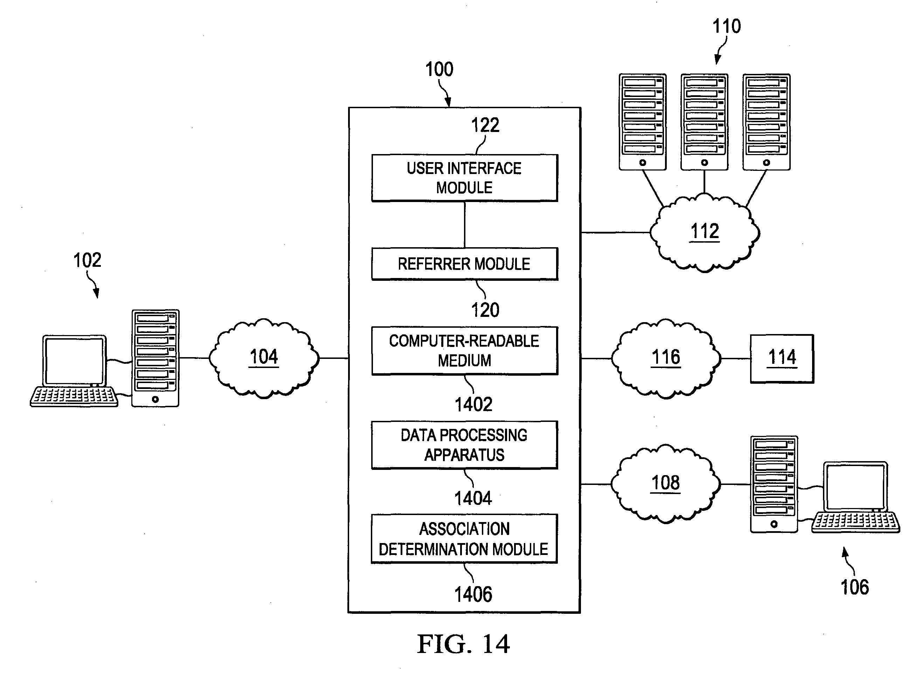

FIG. 14 illustrates an example of the system 100 for presenting referrers according to respective degrees of association. A degree of association can include a conceptual distance that separates a referrer from the organization. Degrees of association can be based on relationships between referrers and the organization. For example, an employee of the organization can have a higher degree of association with the organization relative to an alumnus (i.e., an ex-employee) of the organization. Another person (or entity) who is an associate (for example, a vendor) of the organization can have a degree of association that is lower than that of the alumnus. A person (or entity) who is not associated with the organization can have a relatively least degree of association with the organization. Referrals for candidates for the job can be sought from each type of person (or entity) described above. Thus, each referrer can be of a type (for example, an employee, an alumnus, a vendor, unaffiliated, and the like), and each type can have a respective degree of association with the organization. In some implementations, the system 100 can generate and store associations of types of referrers with the organization in initial stages of execution. By accessing the stored associations, the system 100 can display referrers in a user interface according to their respective types, which, in turn, represent their respective closeness to the organization. Such a user interface can serve as a tool that an entity (for example, the HR representative, the HR department, the organization) can use to evaluate its hiring processes.

The system 100 can include a computer-readable medium 1402 that can store computer instructions executable by data processing apparatus 1404 to present referrers for a job, for example, in one or more user interfaces. In some implementations, the system 100 can implement an association determination module 1406 to store associations between types of referrers and the organization, and to determine respective associations between referrers and the organization based on the referrers' respective types. The system 100 can implement the association determination module 1406 as computer instructions stored on the computer-readable medium 1402 and executable by the data processing apparatus 1404.

In some implementations, the system 100 can implement the referrer module 120 to identify multiple referrers. Referrals for candidates for the job in the organization have been sought from each of the multiple referrers. The referrer module 120 can have identified the referrers by implementing the techniques described above. In addition, the organization (for example, the HR representative or the department with the job to fill or both) can request referrals personally from one or more referrers, and provide data describing the one or more referrers to the system 100. The referrer module 120 can store data describing all such referrers, for example, on a computer-readable medium such as computer-readable medium 1402.

The system 100 can implement the association determination module 1406 to determine a respective degree of association of each of the multiple referrers with the organization based on a type of each referrer. For example, types of referrers can include an employee of the organization, an alumnus of the organization, vendors (or other third parties) affiliated with the organization, entities that are not affiliated with the organization, to name a few. The association determination module 1406 can associate multiple degrees of associations with respective multiple types of referrers. In some implementations, the association determination module 1406 can associate a highest degree of association with employees of the organization and a relatively lowest degree of association with entities not affiliated with the organization. The association determination module 1406 can store the multiple associations. As described below, the association determination module 1406 can access the stored multiple degrees of associations to determine the respective degree of association of each referrer with the organization.

A particular referrer can have received a request for referrals for the job directly from the organization, i.e., either through the system 100 or through other methods (such as personal requests). The association determination module 1406 can determine a type of the particular referrer to whom the request for referrals has been sent. For example, the particular referrer can be associated with metadata that identifies a type of the particular referrer. The association determination module 1406 can determine the type of the particular referrer based on the metadata.

The association determination module 1406 can then access the stored degrees of associations and determine a degree of association for the type of the particular referrer. The association determination module 1406 can associate the degree of association for the type to the particular referrer as well. The association determination module 1406 can similarly determine a respective degree of associations for each referrer to whom the organization directly sent a request for referrals and also for each referrer to whom such a request was indirectly sent. For example, a referrer can have received a request for referrals from another referrer from whom the organization directly sought referrals for the job. The association determination module 1406 can implement techniques similar to those described above to determine a degree of association of the referrer based on a type of the referrer.

In another example, a first referrer can have received a request for referrals directly from the organization, a second referrer can have received a request for referrals from the first referrer, and a third referrer can have received a request for referrals from the second referrer. In this example, the association determination module 1406 can determine that, of the three referrers, the first referrer has the highest degree of association (i.e., closeness) to the organization, the third referrer has the lowest degree of association to the organization, and the second referrer has a degree of association that is between that of the first referrer and the second referrer.

In some implementations, the association determination module 1406 can determine a type of each referrer to whom a request for referral is sent by tracking the request. For example, when the system 100 requests referrals from a referrer, the system 100 can provide a Uniform Resource Locator (URL) that references a webpage of a website hosted by the system 100. When the referrer selects the URL, the system 100 can transmit a job profile that includes the multiple job criteria that represent the requirements for the job in the webpage. In the webpage, the system 100 can include controls using which the referrer can provide referrals for the job. The system 100 can include additional controls using which the referrer can provide (for example, forward) the URL to another referrer.

The system 100 can configure the URL such that, when the referrer provides the URL to the system 100 (for example, to provide referrals for the job), the URL is modified to identify the referrer. For example, an identifier associated with the referrer can be included in the URL. Similarly, the system 100 can configure the URL such that, if the referrer provides the URL to another referrer (for example, in a request to the other referrer to provide referrals for the job to the system 100), the URL is modified to identify both the referrer and the other referrer. When the association determination module 1406 receives the modified URL, the module 1406 can identify the identifier (or identifiers) included in the modified URL to determine the referrer (or referrers) who accessed the URLs. The association determination module 1406 can compare the identifier included in the modified URL with identifiers of referrers to whom the system 100 directly sent the URL to determine if the referrer from whom the URL was received was directly requested for referrals. If the identifier references a referrer who directly received the URL from the system 100, then the association determination module 1406 can associate a higher degree of association with the referrer relative to another referrer who indirectly received the URL from the system 100.

In some implementations, the association determination module 1406 can identify a type of the referrer who indirectly received the request for referrals based on the modified URL. For example, if the identifier references a first referrer who did not directly receive the URL from the system 100, then the association determination module 1406 can determine that the first referrer indirectly received the URL, for example, from a second referrer. The association determination module 1406 can search the system 100 for information describing the first referrer's degree of association with the organization. For example, the association determination module 1406 can compare the first referrer's name (or other identifying information) with stored information that describes the first referrer as an employee or an alumnus or the like. In some implementations, the association determination module 1406 may request the type of the first referrer from the HR representative or from the second referrer who forwarded the URL to the first referrer. In this manner, the association determination module 1406 can identify the type of the second referrer, and subsequently determine a degree of association of the second referrer with the organization.

Providing a URL that references a webpage into which a referrer can provide referrals for the job or that the referrer can forward is an example of techniques that the association determination module 1406 can implement to track the referrers and to determine degrees of association. Alternatively or in addition, the system 100 can transmit e-mail messages requesting referrals for the job directly to referrers, who then forward the e-mail messages to other referrers. The system 100 can configure the e-mail message to include an identifier referencing a referrer to whom the system 100 transmitted the e-mail message. When a referrer forwarded the e-mail message transmitted by the system 100 to another referrer, the system 100 can configure the e-mail message to include an identifier referencing the referrer and another identifier referencing the other referrer. As described above with reference to modified URLs, the association determination module 1406 can determine degrees of associations for referrers based on identifiers included in the e-mail messages received from the referrers.

As described below, the system 100 can implement the display generation module 122, the referrer module 122, and the association determination module 1406 to generate a user interface (for example, user interface 1500a, user interface 1500b) that displays an organization object representing the organization and multiple referrer objects, each representing a corresponding referrer of the multiple referrers. The display generation module 122 can receive data describing the referrers identified by the referrer module 120 and degrees of association determined for the referrers based on the types of the referrers by the association determination module 1406. In the user interface, the display generation module 122 can arrange each referrer object that represents a referrer relative to the organization object that represents the organization according to the respective degree of association determined for each referrer that each referrer object represents. The system 100 can provide the user interface for presentation, for example, on a display device connected to a computer system (such as the input computer system 102, the output computer system 106, or both). The arrangement of the organization object and the referrer objects can quickly and easily allow a user (for example, the HR representative) to visualize a closeness of the multiple referrers to the organization. In some implementations, one or more of the objects included within the user interface may be activated (for example, via mouse-over, click, right-click, or other selection or activation) to present additional detail regarding a particular referrer or the other persons or entities (or combinations of them) presented within the user interface.

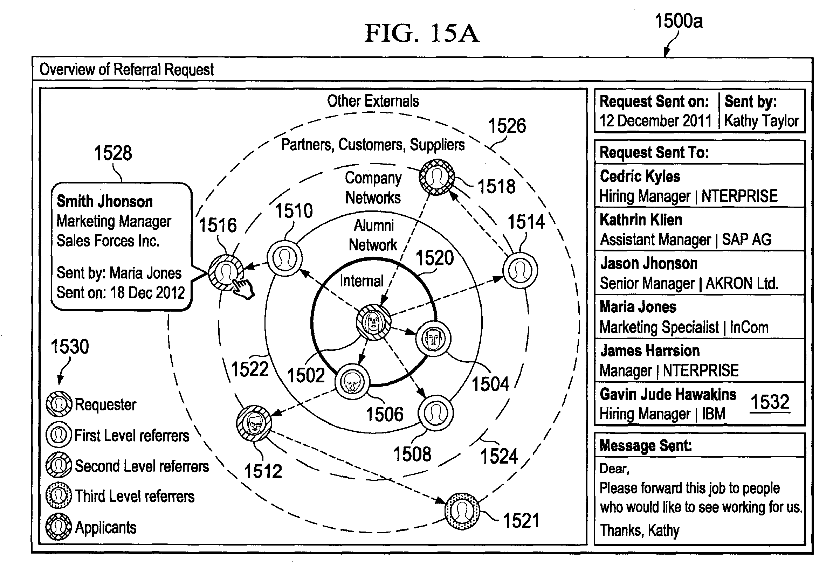

FIG. 15A illustrates an example user interface 1500a for displaying organization objects and referrer objects. In some implementations, the display generation module 122 can arrange referrer objects representing referrers that have higher degrees of association (for example, referrer object 1504) nearer to the organization object 1502 relative to referrer objects representing referrers that have lower degrees of association (for example, referrer 1506). To do so, the display generation module 122 can display multiple enclosed regions, one within another, and can display the organization object 1502 and multiple referrer objects in and on the enclosed regions. An enclosed region represents a type of referrer. As described above, each type of referrer has a degree of association (i.e., the closeness) to the organization. That is, the inner-most enclosed region represents a type of referrer with a highest degree of association (i.e., closeness) to the organization (for example, employees). The outer-most enclosed region represents a type of referrer with a relatively least degree of association to the organization (for example, entities with no affiliation to the organization). The intermediate enclosed regions represent types of refers with intermediate degrees of association to the organization (for example, alumni, vendors). In the user interface 1500a, the enclosed regions are multiple concentric circles and referrer objects are positioned on circumferences of respective circles. The concentric circle with the smallest radius of all the concentric circles represents a highest degree of association and the concentric circle with the greatest radius of the multiple circles represents a relatively lowest degree of association. In other implementations, however, the enclosed regions can be any shape other than circular, for example, polygonal, elliptical, and the like, and need not be concentric.

To allow a viewer of the user interface 1500a to visually distinguish degrees of association of the enclosed regions, the display generation module 122 can alter a display of the circumferences of the multiple enclosed regions. For example, the display generation module 122 can display the thickness of the circumference of the inner-most circle 1520 (i.e., the one that represents a highest degree of association) to be greater than the thickness of the circumference of the circle 1522 (i.e., the one that represents the second highest degree of association). Further, the display generation module 122 can display circumferences of circles that represent higher degrees of association (circle 1520, circle 1522) with solid lines and circumferences of circles that represent relatively lower degrees of association (circle 1526, circle 1524) with dashed or dotted lines. In some examples, the display generation module 122 can display the areas of the circles or the circumferences of the circles (or both) in different colors that correspond to respective degrees of association. In addition, the display generation module 122 can display titles for each degree of association (for example, "Internal," "Alumni Network," "Company Network," "Partners, Customers, Suppliers," "Other Externals") in an enclosed region associated with each degree of association. In this manner, the display generation module 122 can display the circles with one or more visual indicators that represent the degrees of association of the referrers represented by the referrer objects displayed on the circles.

As shown in user interface 1500a, the display generation module 122 can display one or more referrer objects on each enclosed region. The enclosed region on which the display generation module 122 displays a referrer object indicates a degree of association (i.e., closeness) determined for a referrer represented by the referrer object and the organization by the association determination module 1406. Thus, in user interface 1500a, referrer object 1504 and referrer object 1506 displayed on the circle 1520 have highest degrees of association with the organization. Conversely, the referrer object 1521 displayed on the circle 1526 has the lowest degree of association with the organization. Referrer objects 1508 and 1510 (circle 1522) and referrer objects 1512 and 1514 (circle 1524) have intermediate degrees of association with the organization between the highest and lowest degrees. This arrangement of referrer objects on enclosed regions at respective distances from the organization object can enable a user (for example, the HR representative) to visualize a closeness of the multiple referrers represented by the multiple referrer objects to the organization.

The display generation module 122 can display the organization object 1502 in the inner-most enclosed region, for example, at a center of the multiple concentric circles, and can display the multiple referrer objects on respective circumferences of the multiple circles. The display generation module 122 can display connectors that connect different objects to indicate a flow of requests for referrals. For example, the organization can have sought referrals for candidates for the job from referrers represented by referrer object 1504, referrer object 1506, referrer object 1510, and referrer object 1514. Consequently, the display generation module 122 can display a first connector connecting the organization object 1502 and each of referrer objects 1504, 1506, 1510, and 1514. The referrer represented by referrer object 1506 and referrer object 1510 can have forwarded the request received from the organization to a referrer represented by referrer object 1512 and referrer object 1516, respectively. The display generation module 122 can display respective second connectors, each of which connects referrer object 506 and referrer object 1512, and referrer object 1510 and referrer object 1516. Each second connector can visually indicate a referrer who indirectly received requests for referrals from the organization. Similarly, a third connector that connects referrer object 1512 and referrer object 1521 visually indicates that the referrer represented by the referrer object 1521 received requests for referrals from the referrer represented by the referrer object 1512.

In some situations, a referrer can forward the job profile received either directly or indirectly from an organization to a person who can then apply for the job. By doing so, the person can become a candidate for the job. To visually indicate a candidate who applied for a job in response to receiving the job profile from a referrer, the display generation module 122 can arrange, in the user interface 1500a, a candidate object 1518 that represents the candidate who has received information describing the job from a referrer represented by the referrer object 1514 and has applied for the job in the organization. In the user interface 1500a, the display generation module 122 can display a first connector that connects the candidate object 1518 with the organization object 1502. The display generation module 122 can additionally display a second connector connecting the candidate object 1518 with the referrer object 1514 that represents the referrer from whom the candidate received the information describing the job.

In some implementations, the display generation module 122 can display information describing a particular referrer in the user interface 1500a. In some examples, the display generation module 122 can display an image associated with an entity represented by an object within the object. For example, the system 100 can obtain an image of a referrer from the referrer's social associations. The display generation module 122 can display the image within a referrer object that represents the referrer. Similarly, the display generation module 122 can display an image of a member of the HR department in the organization object 1502.

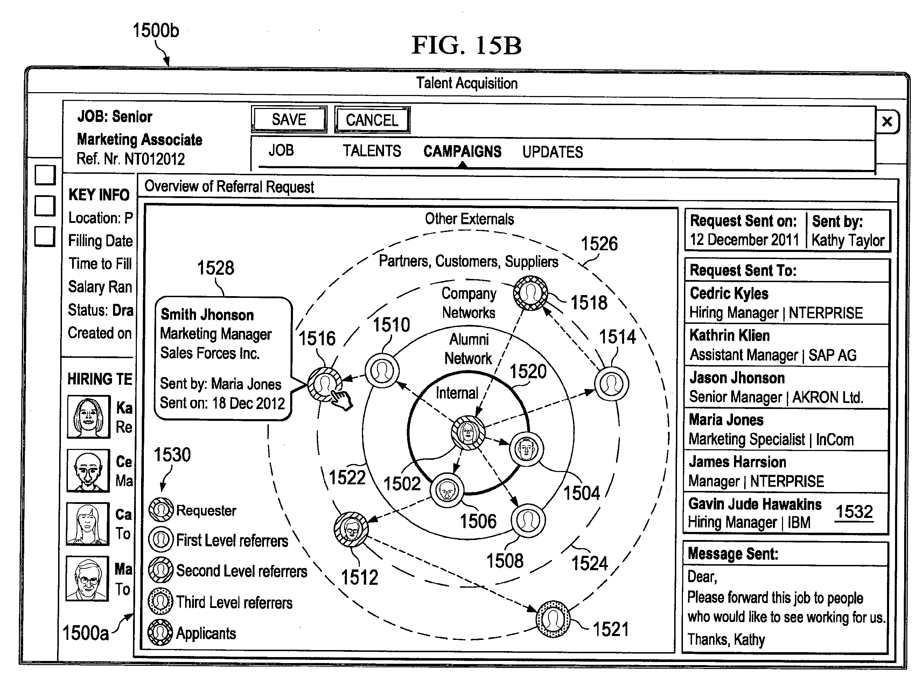

In some examples, the display generation module 122 can detect a selection of a particular referrer object (for example, referrer object 1516) in the user interface 1500a. To select the referrer object 1516, the user can position a position indicator (such as a cursor, a finger or stylus in a touchscreen) over the referrer object 1516. Alternative or additional techniques to select the referrer object 1516 can include one or more of a mouse-over, a click such as a right click, a voice activation, and the like. In response to detecting the selection, the display generation module 122 can display an object 1528, and, in the object 1528, display information describing the referrer represented by the referrer object 1516 (such as personal and professional information, information describing the source or sources who provided requests for referrals to the referrer, and other suitable information). In addition, the display generation module 122 can display a legend 1530 in the user interface 1500a that allows a viewer of the user interface 122 to identify the various objects displayed in the user interface 1500a. In some implementations, the display generation module 122 can display the user interface 1500a over another user interface 1500b (FIG. 15B) such as the user interfaces described above.

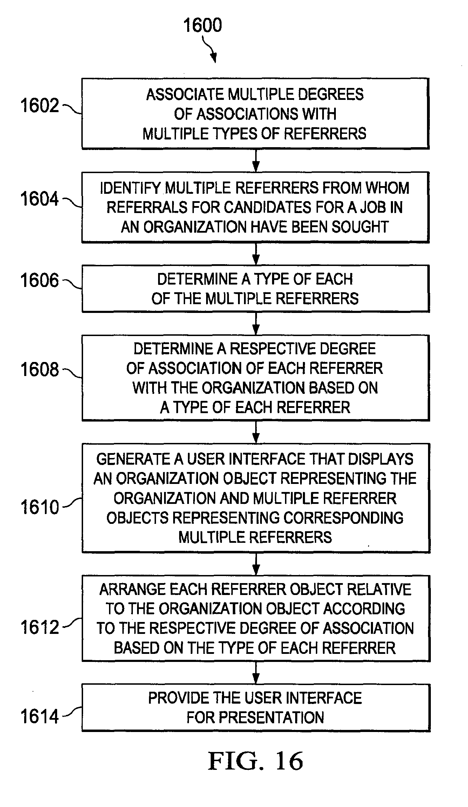

FIG. 16 is a flowchart of an example process 1600 for presenting referrers. The process 1600 can be implemented as computer instructions stored on computer-readable media (for example, the computer-readable medium 1402) and executable by data processing apparatus (for example, data processing apparatus 1404). For example, the process 1600 can be implemented by the system 100 to present referrers. At 1602, multiple degrees of associations can be associated with multiple types of referrers. At 1604, multiple referrers from whom referrals for candidates for a job in an organization have been sought can be identified. At 1606, a type of each of the multiple referrers can be determined. At 1608, a respective degree of association of each referrer with the organization can be determined based on a type of each referrer. At 1610, a user interface that displays an organization object and referrer objects can be generated. The organization object represents the organization and each referrer object represents a referrer. At 1612, each referrer object can be arranged in the user interface relative to the organization object according to the respective degree of association based on the type of each referrer. At 1614, the user interface can be provided for presentation, for example, on a display device of a computer system (for example, the internal computer system 102, the external computer system 106).

By implementing the techniques described above, the system 100 can identify multiple candidates for a job in the organization. At least some of the multiple candidates could have been identified from referrals received from multiple referrers. The system 100 can evaluate each of the multiple candidates for the job across multiple evaluation stages described above. As described below, the system 100 can track the evaluation of each candidate and use the information obtained by the tracking to evaluate the referrer who referred the candidate to the organization.

### VII. Determining Metrics Associated With Referrers

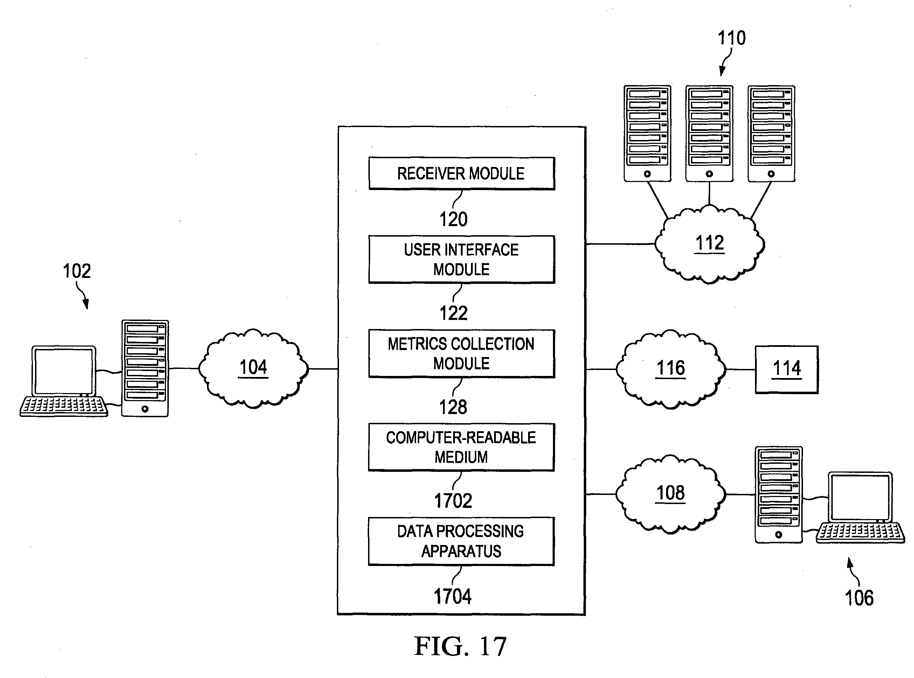

FIG. 17 illustrates an example of the system 100 for determining metrics associated with referrers. A metric can represent a quality of the referrer who referred one or more candidate for the job in the organization. For example, if a first candidate whom a first referrer referred is hired by the organization, then the first referrer is likely a top-quality referrer, and consequently assigned a high metric. On the other hand, if a second candidate whom a second referrer referred is not hired by the organization, then the second referrer is assigned a lower metric than the first referrer. As described below, the organization evaluates all the candidates referred by all the referrers for the job across multiple evaluation stages. A metric that is determined to represent a quality of a referrer can depend on a number of evaluation stages through which a candidate referred by the referrer advances. In some implementations, the system 100 can display metrics determined for one or more referrers in a user interface using which a user (for example, the HR representative) can identify top-referrers to whom requests for referrals for candidates for the job can be sent.

The system 100 can include a computer-readable medium 1702 that can store computer instructions executable by data processing apparatus 1704 to determine metrics associated with referrers. In some implementations, the system 100 can implement the metrics collection module 128 to determine the metrics based on data describing the referrers determined by the referrer module 120. The system 100 can implement the display generation module 122 to display the metrics in one or more user interfaces.

In some implementations, the system 100 can identify a candidate for a job, for example, by implementing one or more of the techniques described above. The system 100 can implement the referrer module 120 to identify a referrer who referred the candidate for the job. The system 100 can track an evaluation of the candidate for the job. The evaluation of the candidate for the job can include multiple stages ("evaluation stages"). For example, as described above with reference to the talent pipeline 912, the multiple stages can include a "Search Results" stage, a "Long List" stage, a "Short List" stage, an "Applicants" stage, an "Interviewed" stage, an "Offered" stage, and a "Hired" stage.

The multiple candidates identified for the job can be evaluated across the multiple evaluation stages in sequence. That is, the system 100 can determine that a person is a candidate for the job in the "Search Results" stage. The organization (for example, the HR department or the department with the job to fill or both) can evaluate the candidate to determine whether the candidate can advance to the "Long List" stage. To do so, the organization can determine whether the candidate's social associations broadly meet one or more of the multiple criteria that collectively represent the job. If one or more of the criteria are met, then the user can update the system 100 to indicate that the candidate has advanced from the "Search Results" stage to the "Long List" stage.

The organization can then evaluate the candidate in the "Long List" stage to determine whether the candidate can advance to the "Short List" stage. To do so, the organization can determine whether the candidate's social associations more closely satisfy the multiple criteria that collectively represent the job. If the candidate's social associations more closely satisfy the multiple criteria, then the user can update the system 100 to indicate the candidate has advanced from the "Long List" stage to the "Short List" stage. The organization can further evaluate the candidate to determine whether the candidate can be deemed as an applicant for the job. If the organization deems the candidate to be an applicant for the job, then the user can update the system 100 to indicate that the candidate has advanced to the "Applicants" stage.

At this stage, the organization can evaluate whether the candidate in the "Applicants" stage should be interviewed. If the organization determines that the candidate should be interviewed, then the user can update the system 100 to indicate that the candidate has advanced to the "Interviewed" stage. If the organization determines to offer the candidate the position, then the user can update the system 100 to indicate that the candidate has advanced to the "Offered" stage. If the candidate accepts the offer, then the user can update the system 100 to indicate that the candidate has advanced to the "Hired" stage.

The system 100 can implement the techniques described with reference to the candidate above for all persons determined as candidates for the job. In other words, as the organization evaluates each candidate across the multiple stages such as those described above, the user can update the system 100 to indicate the candidates who have advanced to subsequent stages during the evaluation. Not all candidates may advance from a present stage to a subsequent stage upon evaluation. To track the evaluation of the candidate for the job, the system 100 can identify one or more of the multiple stages to which the candidate advances. That a candidate advances to later stages of the multiple evaluation stages can indicate that the organization prefers the candidate relative to another candidate to does not advance to the later stages. That a particular candidate does not advance to a later stage alone may, in some instances, not be indicative of the organization's preference for the particular candidate, such as when the particular candidate removes herself from consideration for the job. Other such irregularities and exception situations may be considered by the system 100, and used in determining the organizations' preference of a candidate for the job.

In some implementations, the system 100 can implement the display generation module 122 to display a number of candidates in each stage in the talent pipeline 912. For example, the display generation module 122 can display "327" under "Search Results" in the talent pipeline 912 indicating that 327 persons have been identified as candidates for the job. In addition, the display generation module 122 can display one or more numbers under each stage in the talent pipeline 912. The numbers can include a number of candidates who have advanced to each stage or a maximum number of candidates permissible for each stage (or both). For example, the system 100 can determine that the organization has established 110 candidates as the target number for the "Long List" stage and that the user has updated the system 100 to indicate that 12 candidates have advanced to the "Long List" stage. Accordingly, the display generation module 122 can display "110" and "12" under "Long List" in the talent pipeline 912.

Some of the candidates that the organization evaluates could have been referred to the organization by one or more referrers. If a referrer referred a candidate who advances to later stages of the multiple evaluation stages, then the referrer can be a higher quality referrer relative to another referrer who referred another candidate who did not advance to the later stages. The system 100 can implement the metrics collection module 128 to determine metrics that represent qualities of referrers based on tracking the evaluation of candidates referred by the referrers. For a particular referrer who referred a particular candidate, the system 100 can identify one or more of the multiple stages to which the particular candidate advances. The metrics collection module 128 can determine a stage-based metric for each of the one or more of the multiple stages to which the particular candidate advances. The metrics collection module 128 can determine the metric for the particular referrer based on the one or more stage-based metrics determined for each of the one or more of the multiple stages to which the particular candidate advances.

For example, the stage-based metric can be a numerical value associated with a stage. Thus, each of the "Search Results" stage, the "Long List" stage, the "Short List" stage, the "Applicants" stage, the "Interviewed" stage, the "Offered" stage, and the "Hired" stage can be associated with a corresponding numerical value. As the particular candidate who was referred by the particular referrer advances to each stage, the metrics collection module 128 can associate the numerical value associated with the stage with the particular referrer. For example, if the particular candidate was selected to the "Search Results" stage, the metrics collection module 128 can associate the particular referrer with a numerical value (for example, X) associated with the "Search Results" stage. If the particular candidate advanced to the "Long List" stage, then the metrics collection module 128 can associate the particular referrer with a numerical value that is a function of X and a numerical value (for example, Y) that is associated with the "Long List" stage. Similarly, if the particular candidate advanced to the "Short List" stage, then the metrics collection module 128 can associate the particular referrer with a numerical value that is a function of X, Y, and a numerical value (for example, Z) that is associated with the "Short List" stage.

In some implementations, the numerical value that the metrics collection module 128 associates with the particular referrer when the particular candidate has advanced more than one stage can be a simple function of each of the more than one stage. For example, if the particular candidate advanced to the "Long List" stage, then the numerical value that the metrics collection module 128 associates with the particular referrer can be (X + Y). If the particular candidate advanced to the "Short List" stage, then the numerical value that the metrics collection module 128 associates with the particular referrer can be (X + Y + Z). In some implementations, the metrics collection module 128 can implement more complex functions (for example, a weight-based function) relative to the simple function described above.

In some implementations, the stage-based metrics for the multiple stages can be weighted equal to each other. With reference to the example above, X, Y, and Z can be equal to each other such that, if the particular candidate advanced through two stages, then the metrics collection module 128 associates a numerical value of 2X to the particular referrer. If the particular candidate advanced through three stages, then the metrics collection module 128 associates a numerical value of 3X to the particular referrer.

In some implementations, the stage-based metric for an earlier stage of the multiple stages can be weighted lower than a stage-based metric for a later stage of the multiple stages. The organization may evaluate a candidate at a later stage (for example, the "Interviewed" stage) more thoroughly relative to a candidate at an earlier stage (for example, the "Long List" stage). Consequently, the metrics collection module 128 can associate a higher numerical value with the later stage relative to the earlier stage. With reference to the example above, Y, the numerical value associated with the "Long List" stage, can be twice X, the numerical value associated with the "Search Results" stage. Thus, the metrics collection module 128 can associate a numerical value of X with the particular referrer if the particular candidate was selected only to the "Search Results" stage, and a numerical value of 3X with the particular referrer if the particular candidate was selected to the "Long List" stage. In other implementations, different weights can be associated with each stage-based metric.

In some implementations, the multiple evaluation stages can include a subset of stages before the candidate is hired and a subset of stages after the candidate is hired. In other words, after a candidate is hired, the organization can track a performance of the candidate (now an employee). To do so, the organization can compare the performance of the candidate with a set of benchmarks (for example, qualifications) that the organization has established for a new hire or with other employees in the organization (or both). For example, each benchmark can include a level that a new employee should have achieved after having been employed by the organization for a predetermined period of time. The metrics collection module 128 can determine additional metrics for the particular referrer based on the benchmarks that the particular candidate (now the employee) achieves or based on comparing the particular candidate with the other employees. If the particular candidate's performs at a high level after having been hired by the organization, then the particular referrer is associated with high metrics relative to if the particular candidate performs at a relatively lower level.

The metrics collection module 128 can implement the techniques described above for each referrer from whom a candidate for the job was received and evaluated. By doing so, the metrics collection module 128 can determine metrics for the multiple referrers who referred candidates for the job the organization. For example, the particular referrer can have recommended a first candidate and a second candidate in addition to the particular candidate. The particular candidate could have advanced to the "Hired" stage; the first candidate could have advanced to the "Applicants" stage; the second candidate could have advanced to the "Short List" stage. Thus, for the particular referrer, the metrics that the metrics collection module 128 determines can be representative of 3 candidates at the "Short List" stage, 2 candidates at the "Applicants" stage and 1 candidate at the "Hired" stage. The metrics collection module 128 can implement similar techniques to determine metrics for referrers who similarly referred candidates for multiple other jobs to the organization. In some implementations, the metrics for the candidates can be stored on a computer-readable medium, for example, the computer-readable medium 1702.

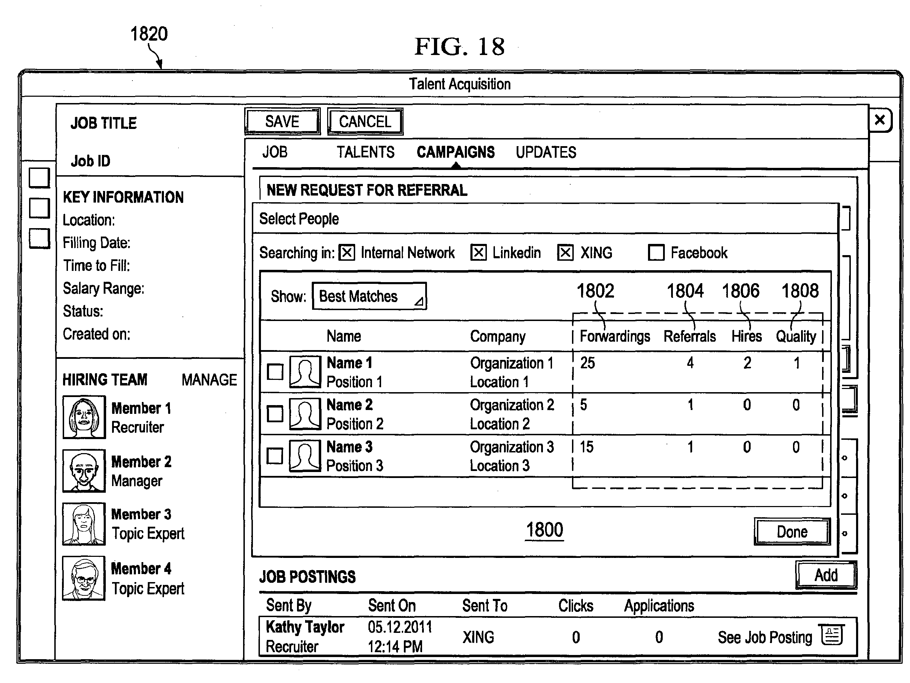

In some implementations, the system 100 can provide the metrics determined for the referrers, for example, in one or more user interfaces or as input to other functions (or combinations of them). FIG. 18 shows an example of a user interface 1800 that displays metrics determined for the referrers. In some implementations, the display generation module 122 can display the user interface 1800 in response to receiving an input from a user for candidate referrers from whom referrals for a new job can be sought, as described above. The display generation module 122 can display data describing the referrers (for example, personal and professional information of the referrers). For each referrer, the display generation module 122 can display metrics determined by the metrics collection module 128 which represent a history of referrals that have previously been sought from the referrer and a quality of the referrer. The metrics can allow the user to determine whether or not to contact the referrer for referrals for the new job. In the user interface 1800, the display generation module 122 can display a number of "Forwardings" 1802, i.e., a number of persons whom the referrer has contacted in the past about one or more jobs, a number of "Referrals" 1804, i.e., a number of persons who were received from the referrer as referrals for the one or more jobs, a number of "Hires" 1806, i.e., a number of persons who were hired, and a "Quality" metric 1808, i.e., a quality of the persons who were hired, for example. In some implementations, the display generation module 122 can display the user interface 1800 over another user interface 1820, such as a user interface described above.

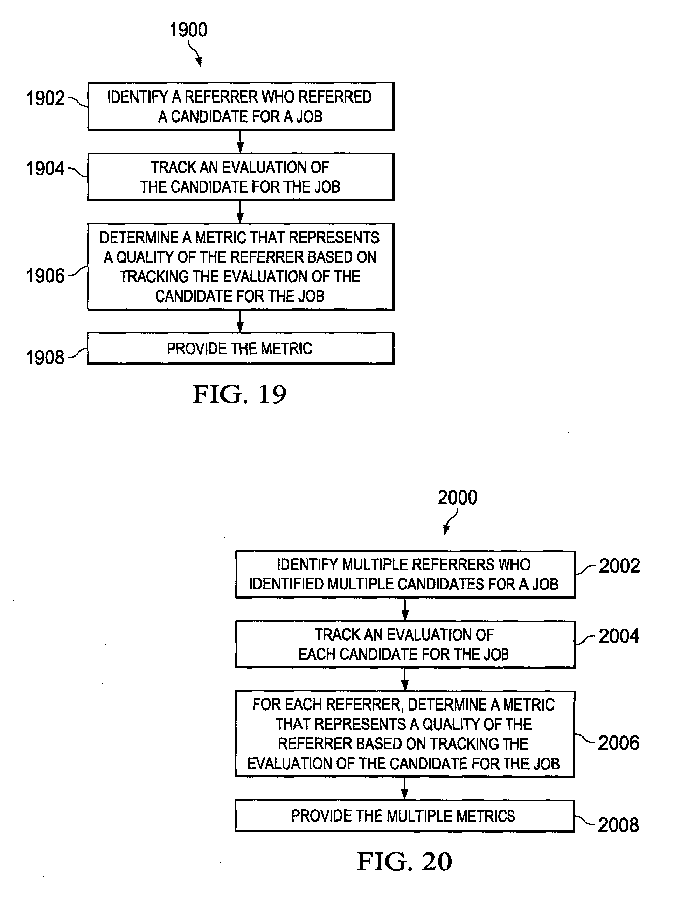

FIG. 19 is a flowchart of an example process 1900 to analyze a referrer. The process 1900 can be implemented as computer instructions stored on computer-readable media (for example, the computer-readable medium 1702) and executable by data processing apparatus (for example, data processing apparatus 1704). For example, the process 1900 can be implemented by the system 100 to present referrers. At 1902, a referrer who referred a candidate for the job can be identified. At 1904, an evaluation of the candidate for the job can be tracked. At 1906, a metric that represents a quality of the referrer based on tracking the evaluation of the candidate for the job can be determined. At 1908, the metric can be provided, for example, for presentation in a user interface or as an input to another function that uses the metric as an input (or combinations of them).

FIG. 20 is a flowchart of another example process 2000 to analyze a referrer. The process 2000 can be implemented as computer instructions stored on computer-readable media (for example, the computer-readable medium 1702) and executable by data processing apparatus (for example, data processing apparatus 1704). For example, the process 2000 can be implemented by the system 100 to present referrers. At 2002, multiple referrers can be identified. Each referrer can have identified a candidate of multiple candidates for the job. At 2006, an evaluation of each candidate for the job can be tracked. At 2008, a respective metric that represents a quality of the referrer can be determined for each referrer. The respective metric can be determined based on tracking the candidate that each referrer referred for the job resulting in multiple metrics for the respective multiple referrers. At 2010, the multiple metrics can be provided, for example, for presentation in a user interface or as an input to another function that uses the metric as an input (or combinations of them).

### VIII. Implementation Details

Implementations of the subject matter and the operations described in this disclosure can be implemented in digital electronic circuitry, or in computer software, firmware, or hardware, including the structures disclosed in this disclosure and their structural equivalents, or in combinations of one or more of them. Implementations of the subject matter described in this disclosure can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, for example, a machine-generated electrical, optical, or electromagnetic signal that is generated to encode information for transmission to suitable receiver apparatus for execution by a data processing apparatus. A computer storage medium, for example, the computer-readable medium, can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical and/or non-transitory components or media (for example, multiple CDs, disks, or other storage devices).

In some implementations, the operations described in this disclosure can be implemented as a hosted service provided on a server in a cloud computing network. For example, the computer-readable storage media 110 can be logically grouped and accessible within a cloud computing network. Servers 140 within the cloud computing network can include a cloud computing platform for providing cloud-based services. The terms "cloud," "cloud computing," and "cloud-based" may be used interchangeably as appropriate without departing from the scope of this disclosure. Cloud-based services can be hosted services that are provided by servers and delivered across a network to a client platform to enhance, supplement, or replace applications executed locally on a client computer. The system 100 can use cloud-based services to quickly receive software upgrades, applications, and other resources that would otherwise require a lengthy period of time before the resources can be delivered to the system 100.

The operations described in this disclosure can be implemented as operations performed by a data processing apparatus, for example, data processing apparatuses 204, 504, 804, 1104, 1404, 1704, on data stored on one or more computer-readable storage devices, for example, 502, 802, 1102, 1402, 1702, or received from other sources. The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example, an FPGA (field programmable gate array) or an ASIC (application-specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (for example, one or more scripts stored in a markup language document), in a single file dedicated to the program in question, or in multiple coordinated files (for example, files that store one or more modules, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, for example, an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a Global Positioning System (GPS) receiver, or a portable storage device (for example, a universal serial bus (USB) flash drive), to name just a few. Devices suitable for storing computer program instructions and data include all forms of non-volatile memory, media and memory devices, including by way of example semiconductor memory devices, for example, EPROM, EEPROM, and flash memory devices; magnetic disks, for example, internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this disclosure can be implemented on a computer having a display device, for example, a CRT (cathode ray tube) or LCD (liquid crystal display) monitor, for displaying information to the user, and a keyboard, a pointing device, for example, a mouse or a trackball, or a microphone and speaker (or combinations of them) by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Implementations of the subject matter described in this disclosure can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this disclosure, or any combination of one or more such back-end, middleware, or front-end components. The components of the system can be interconnected by any form or medium of digital data communication, for example, a communication network. Examples of communication networks include a local area network ("LAN") and a wide area network ("WAN"), an inter-network (for example, the Internet), and peer-to-peer networks (for example, ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (for example, an HTML page) to a client device (for example, for purposes of displaying data to and receiving user input from a user interacting with the client device). Data generated at the client device (for example, a result of the user interaction) can be received from the client device at the server.

While this disclosure contains many specific implementation details, these should not be construed as limitations on the scope of any implementations or of what may be claimed, but rather as descriptions of features specific to particular implementations of particular implementations. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method performed by data processing apparatus to identify candidate referrers, the method comprising:
receiving a plurality of job criteria that collectively represents requirements of a job;
identifying a plurality of referrers, wherein each referrer is associated with a plurality of referrer attributes that collectively represents social associations of each referrer;
determining, based on social associations of the plurality of referrers and the requirements of the job, a subset of the plurality of referrers, wherein each referrer in the subset is associated with one or more referrer attributes that match one or more job criteria of the plurality of job criteria; and
providing the subset of the plurality of referrers as candidate referrers from whom referrals for candidates for the job can be sought.

2. The method of claim 1, wherein providing the subset of the plurality of referrers as candidate referrers comprises displaying the subset of the plurality of referrers in a user interface.

3. The method of claim 2, wherein the job is a job in an organization, and wherein the method further comprises displaying, in the user interface, whether a candidate referrer is internal or external to the organization.

4. The method of any one of the preceding claims, wherein a referrer attribute associated with a referrer includes an industry with which the referrer is or was associated.

5. The method of claim 4, wherein a job criterion includes an industry, and wherein the method further comprises determining that the industry with which the referrer is or was associated matches the industry in the job criterion.

6. The method of any one of the preceding claims, further comprising:
determining a capability of each candidate referrer to provide referrals for candidates for the job sought; and
ranking the candidate referrers based on the capability of each candidate referrer.

7. The method of claim 6, wherein determining the capability of each candidate referrer to provide referrals comprises determining referral metrics associated with each candidate referrer, and wherein the method further comprises providing the referral metrics with the subset of the plurality of referrers.

8. The method of claim 7, wherein the referral metrics include at least one of a number of referrals previously received from each candidate referrer or a number of previous hires based on the referrals previously received from each candidate referrer.

9. The method of any one of the preceding claims, further comprising:
receiving input to select one or more candidate referrers of the subset; and
providing the plurality of job criteria that collective represents the requirements of the job to the selected one or more candidate referrers.

10. The method of any one of the preceding claims, wherein determining the subset of the plurality of referrers comprises, for each referrer:
comparing a plurality of referrer attributes associated with each referrer to the plurality of job criteria; and
identifying one or more referrers associated with at least one referrer attribute that matches at least one job criterion.

11. The method of any one of the preceding claims, wherein the social associations of the plurality of referrers include professional associations, wherein the social associations are digitally stored in a computer-readable storage medium, and wherein identifying the plurality of referrers comprises accessing the social associations stored in the computer-readable storage medium.

12. The method of any one of the preceding claims, wherein receiving the plurality of job criteria comprises:
providing a user interface that includes a plurality of controls, each control configured to receive a job criterion; and
receiving the plurality of job criteria through the plurality of controls in the user interface.

13. A non-transitory computer-readable medium storing instructions executable by data processing apparatus to perform operations according to any one of the preceding claims.

14. A computer system comprising:
means for receiving a plurality of job criteria that collectively represents requirements of a job;
means for identifying a plurality of referrers, wherein each referrer is associated with a plurality of referrer attributes that collectively represents social associations of each referrer;
means for determining, based on social associations of the plurality of referrers and the requirements of the job, a subset of the plurality of referrers, wherein each referrer in the subset is associated with one or more referrer attributes that match one or more job criteria of the plurality of job criteria; and
means for providing the subset of the plurality of referrers as candidate referrers from whom referrals for candidates for the job can be sought.

15. The system of claim 14, wherein a referrer attribute associated with a referrer includes an industry with which the referrer is or was associated, wherein a job criterion may include an industry, and wherein the operations may further comprise determining that the industry with which the referrer is or was associated matches the industry in the job criterion.
